# EUROPEAN PATENT APPLICATION

(11) **EP 4 461 188 A1**
(43) Date of publication of application: **13.11.2024**
(21) Application number: 22920756.8
(22) Date of filing: 30.09.2022
(51) Int. Cl.: A47L 11/40, G01P 15/00, G01B 21/02

(54) **CLEANER**

(30) Priority: 14.01.2022 KR 20220006087
(71) Applicant: LG Electronics Inc., Yeongdeungpo-gu Seoul 07336 (KR)
(72) Inventor: JANG, Jaewon, Seoul 08592 (KR); LEE, Jaehoon, Seoul 08592 (KR); KIM, Hyungsub, Seoul 08592 (KR)
(74) Representative: Schornack, Oliver
(86) International application number: PCT/KR2022/014756
(87) International publication number: WO 2023/136425

(57) **Abstract**

The present disclosure relates to a cleaner with improved safety with respect to a cleaning module. According to an embodiment of the present disclosure, changes in postures of the cleaning module may be measured through one or more sensors included in a motion detecting part. Therefore, there is an advantageous effect that a problem for the user to have injuries by a mop containing high temperature steam does not occur. In addition, according to the present disclosure, a planar motion displacement of the cleaning module may be measured through one or more sensors included in the motion detecting part. Accordingly, when a control unit detects that the cleaning module is left in a state of contacting a surface to be cleaned for a long period of time, the drive of a feedwater pump, a heater, and a mop motor is controlled to stop. Therefore, there is an advantageous effect that the flooring of the surface to be cleaned is not damaged.

## Description

### CROSS REFERENCE TO RELATED APPLICATION

The present application claims priority to Korea Patent Application No. 10-2022-0006087, filed on January 14, 2022, the entire contents of which are incorporated

### herein for all purposes by this reference.

### [Technical Field]

The present disclosure relates to a cleaner, more particularly, a cleaner having improved safety with respect to a cleaning module with a steaming function.

### [Background Art]

In general, a cleaner refers to an electrical appliance that draws in small garbage or dust by sucking air using electricity and fills a dust bin provided in a product with the garbage or dust. Such a cleaner is generally called a vacuum cleaner.

The cleaners may be classified into a manual cleaner which is moved directly by a user to perform a cleaning operation, and an automatic cleaner which performs a cleaning operation while autonomously traveling. Depending on the shape of the cleaner, the manual cleaners may be classified into a canister cleaner, an upright cleaner, a handy cleaner, a stick cleaner, and the like.

The canister cleaners were widely used in the past as household cleaners. However, recently, there is an increasing tendency to use the handy cleaner and the stick cleaner in which a dust bin and a cleaner main body are integrally provided to improve convenience of use.

In the case of the canister cleaner, a main body and a suction port are connected by a rubber hose or pipe, and in some instances, the canister cleaner may be used in a state in which a brush is fitted into the suction port.

The handy cleaner (hand vacuum cleaner) has maximized portability and is light in weight. However, because the handy cleaner has a short length, there may be a limitation to a cleaning region. Therefore, the handy cleaner is used to clean a local place such as a desk, a sofa, or an interior of a vehicle.

A user may use the stick cleaner while standing and thus may perform a cleaning operation without bending his/her waist. Therefore, the stick cleaner is advantageous for the user to clean a wide region while moving in the region. The handy cleaner may be used to clean a narrow space, whereas the stick cleaner may be used to clean a wide space and also used to a high place that the user's hand cannot reach. Recently, modularized stick cleaners are provided, such that types of cleaners are actively changed and used to clean various places.

Methods of cleaning floors, which are surfaces to be cleaned, are broadly classified into a dry-cleaning method and a wet-cleaning method. The dry-cleaning method refers to a method of wiping up or sucking dust, and a vacuum cleaner in the related art uses the dry-cleaning method. The wet-cleaning method refers to a method of performing a cleaning operation by wiping up the dust with a wet mop. As another wet-cleaning method, there is a method of sterilizing and cleaning a floor by producing and spraying high-temperature steam.

Recently, various cleaning methods have been proposed to cope with the use of various building materials. In the related art, because the floors are mainly made of wooden materials, only the dry-cleaning method is performed because the wet-cleaning method cannot be performed. However, recently, the floors are made of various materials such as steel sheets or marble, and therefore, the wet-cleaning method can be performed.

In the related art, a dry-cleaning dedicated cleaner is used to perform the dry-cleaning method, and a wet-cleaning dedicated cleaner is used to perform the wet-cleaning method. However, a user is inconvenienced because the user needs to purchase the two types of cleaners to clean various types of floors. To solve the above-mentioned problem, research has been conducted on a cleaner including a single main body, a dry-cleaning module, and a wet-cleaning module and configured such that the dry-cleaning module is mounted on the main body to perform the dry-cleaning method and the wet-cleaning module is mounted on the main body to perform the wet-cleaning method.

The wet-cleaning module includes a water container configured to store water, a heater configured to produce steam by heating water, and a mop configured to wipe a floor by receiving water or steam.

In the wet cleaning module, water supplied from the water container is phase-shifted into steam through a heater, and the mop is wetted with this steam. At this time, as the mop containing high temperature steam rotates in contact with the surface to be cleaned, contaminants on the surface to be cleaned can be removed.

Meanwhile, there are cases where the cleaning module is lifted and moved while the mop is rotating at high temperature in order to change the cleaning position. Alternatively, the cleaning module may be lifted from the surface to be cleaned for a purpose such as checking the condition of the cleaning module etc.

In this case, the frictional load between the mop and the surface to be cleaned decreases sharply, causing the mop to rotate faster. At this time, centrifugal force causes high-temperature fluid to scatter to an outside of the mop in a circumferential direction, causing injury such as burns to the user's feet and other body.

Alternatively, if the cleaning module spraying steam is left in contact with the surface to be cleaned, problems may arise where the flooring materials such as linoleum or wood that make up the surface to be cleaned are damaged due to prolonged contact and friction between the high-temperature mop and the surface to be cleaned.

As a prior art document, Korean patent No. 0800185 is suggested.

The prior art document discloses a cleaner having a nozzle including a steam generator configured to heat water to generate steam and a mop combined to the nozzle.

In the prior art document, it is configured that a calorific value, a temperature, and an operating time of the heater can be adjusted through a control unit. In addition, a safety device is provided to prevent the heater from overheating excessively, melting internal parts of the nozzle or causing a safety accident, and the safety device is configured to control the power supplied to the heater.

In the case of the prior art document, it is possible to prevent internal parts included in the cleaning module from overheating, but there is still no solution provided for a problem of preventing users from being exposed to burns or damage to flooring due to splashing of high-temperature water.

### [DISCLOSURE]

### [Technical Problem]

The purpose of the present invention is to provide a cleaner that does not cause injury to the user's body due to a mop containing high temperature steam even when the cleaning module is separated from the surface being cleaned.

In addition, the purpose of the present disclosure is to provide a cleaner that does not damage the flooring of the surface to be cleaned even when the cleaning module is left in contact with the surface to be cleaned for a long period of time.

### [Technical Solution]

An embodiment of the present disclosure to achieve the above-mentioned purpose is a cleaner configured to wet clean a surface to be cleaned using a rotating mop, including: a main body in which an operating part configured to receive an instruction and a main battery configured to supply electric power are disposed; and a cleaning module to which the main body is connected on an upper part thereof and to which the mop is connected on a lower part thereof.

In this case, the cleaning module may include: a water container; a heater configured to generate steam to be supplied to the mop from water stored in the water container; a feedwater pump configured to press the water stored in the water container to be pressure-fed into the heater; a mop motor connected to the mop and configured to be driven to rotate the mop; a motion detecting part configured to detect a motion of the cleaning module; a load measuring part configured to measure a rotational load of the mop; and a control unit configured to control the cleaning module in a safety mode when the motion detecting part detects that the cleaning module is in a tilted state compared to a surface to be cleaned, or when the load measuring part detects a certain magnitude reduction with respect to the rotational load.

The safety mode control may be a stopping operation of at least one among the heater, the feedwater pump, and the mop motor.

The motion detecting part may include a gyro sensor which detects a tilt angle at which the cleaning module is tilted compared to the surface to be cleaned.

The motion detecting part may include an acceleration sensor which detects a tilt angle at which the cleaning module is tilted compared to the surface to be cleaned.

Under the safety mode control, the control unit may stop drive of the heater and the feedwater pump and control a rotating speed of the mop motor to be greater than 0 and smaller than a current speed.

Under the safety mode control, the control unit may perform a first safety mode control which stops drive of the heater and the feedwater pump and controls a rotating speed of the mop motor to be greater than 0 and smaller than a current speed when the detected angle is equal to or greater than a preset first threshold angle and smaller than a second threshold angle, and perform a second safety mode control which stops drive of the heater, the feedwater pump, and the mop motor when the detected angle is equal to or greater than the second threshold angle.

The control unit may control the cleaning module in a safety mode when the motion detecting part detects that the cleaning module is in a non-moving-state on a surface to be cleaned.

The safety mode control may be a stopping operation of at least one among the heater, the feedwater pump, and the mop motor.

The motion detecting part may include a displacement sensor which detects a planar motion displacement with which the cleaning module travels in a state of contacting a surface to be cleaned.

When a certain time elapses in a state in which the planar motion displacement of the cleaning module detected by the motion detecting part is equal to or smaller than a preset threshold displacement, the control unit may perform the safety mode control.

When a preset first threshold time elapses in a state in which the planar motion displacement of the cleaning module detected by the motion detecting part is equal to or smaller than a preset threshold displacement, the control unit may perform a pause mode control which pauses the heater, the feedwater pump, and the mop motor, and continues supply of electric power to the cleaning module, and when a preset second threshold time which is greater than the first threshold time elapses in a state in which the planar motion displacement of the cleaning module detected by the motion detecting part is equal to or smaller than a preset threshold displacement, the control unit may perform a cleaning end mode control which maintains a paused state of the heater, the feedwater pump, and the mop motor and stops supply of electric power to the cleaning module.

The electric power may be supplied from a main battery or, a sub battery installed in a connection pipe which connects between the cleaning module and the main body.

In the cleaner according to the embodiment of the present disclosure, when at least one among a first event, in which the cleaning module is spaced apart from a surface to be cleaned, and a second event, in which the cleaning module does not move for a certain period of time or more, occurs, at least one among the heater, the feedwater pump, and the mop motor may be controlled to stop.

When the first event occurs and the second event does not occur, the heater and the feedwater pump may be controlled to stop, and a speed at which the mop motor rotates may be controlled to be greater than 0, and smaller than a current speed.

When the first event occurs and the second event does not occur, the cleaner may operate in a first safety mode which stops drive of the heater and the feedwater pump and controls a rotating speed of the mop motor to be greater than 0 and smaller than a current speed when a tilt angle of the cleaning module compared to a surface to be cleaned is equal to or greater than a preset first threshold angle and smaller than a second threshold angle, and the cleaner may operate in a second safety mode which stops drive of the heater, the feedwater pump, and the mop motor when a tilt angle of the cleaning module compared to a surface to be cleaned is equal to or greater than the second threshold angle.

When only the second event occurs, at an elapse of a certain time in a state in which a planar motion displacement with which the cleaning module travels in a state of contacting a surface to be cleaned is equal to or smaller than a preset threshold displacement, the heater, the feedwater pump, and the mop motor may be controlled to stop.

When only the second event occurs, at an elapse of a preset first threshold time in a state in which a planar motion displacement with which the cleaning module travels in a state of contacting a surface to be cleaned is equal to or smaller than a preset threshold displacement, the cleaner may operate in a pause mode in which the heater, the feedwater pump, and the mop motor are paused and supply of electric power to the cleaning module continues, and at an elapse of a preset second threshold time which is greater than the first threshold time in a state in which the planar motion displacement is equal to or smaller than a preset threshold displacement, the cleaner may operate in a cleaning end mode in which a paused state of the heater, the feedwater pump, and the mop motor is maintained and supply of electric power to the cleaning module stops.

The cleaning module may further include a gyro sensor which detects occurrence of the first event.

The cleaning module may further include an acceleration sensor which detects occurrence of the first event.

The cleaning module may further include a displacement sensor which detects occurrence of the second event.

### [Advantageous Effect]

According to the present disclosure, a change in a posture of the cleaning module may be measured through one or more sensors included in the motion detecting part. Accordingly, when the control unit detects whether the cleaning module is separated from the surface being cleaned, the operation of at least one of the water pump, heater, and mop motor is controlled to stop. Therefore, it is advantageous that the problem of injury to the user's body due to the mop containing high temperature steam does not occur.

In addition, according to the present disclosure, a planar motion displacement of the cleaning module may be measured through one or more sensors included in the motion detecting part. Accordingly, when the control unit detects that the cleaning module is left in contact with the surface to be cleaned for a long period of time, the operation of the feedwater pump, the heater, and the mop motor stop. Therefore, there is an effect of preventing the flooring of the surface to be cleaned from being damaged.

The technical problem to be achieved by the present disclosure is not limited to the above-mentioned technical problem, and other technical problems that are not mentioned will be clearly understood by ordinary-skilled persons in the art to which the present disclosure pertains from the following description.

### [Description of Drawings]

FIG. 1 is a perspective view of a cleaning module according to an embodiment of the present disclosure.
FIG. 2 is a front view of a cleaning module according to an embodiment of the present disclosure.
FIG. 3 is a plan view of a cleaning module according to an embodiment of the present disclosure.
FIG. 4 is a right side view of a cleaning module according to an embodiment of the present disclosure.
FIG. 5 is a bottom view of a cleaning module according to an embodiment of the present disclosure.
FIG. 6 is an exploded view of a cleaning module according to an embodiment of the present disclosure.
FIG. 7 is a view illustrating an internal configuration of FIG. 3 after removing a water container and an upper housing from FIG. 3.
FIG. 8 is a cross-sectional view of A part in FIG. 3.
FIG. 9 is a cross-sectional view of B part in FIG. 3.
FIG. 10 is a perspective view of a water container according to an embodiment of the present disclosure.
FIG. 11 is a view of a water container according to an embodiment of the present disclosure viewed from a bottom.
FIG. 12 is a plan view of a water container according to an embodiment of the present disclosure.
FIG. 13 is a bottom view of a water container according to an embodiment of the present disclosure.
FIG. 14 is a right side view of a water container according to an embodiment of the present disclosure.
FIG. 15 is an exploded view of a water container according to an embodiment of the present disclosure.
FIG. 16 is a cross-sectional view of C part in FIG. 12.
FIG. 17 is a cross-sectional view of D part in FIG. 12.
FIG. 18 is a view schematically illustrating a water level inside a water container according to whether there is an air-channel or not.
FIG. 19 is a perspective view of an upper housing according to an embodiment of the present disclosure.
FIG. 20 is a block diagram illustrating control relationship related to a safety mode control of a cleaner which includes a cleaning module according to an embodiment of the present disclosure.
FIG. 21 is a flowchart illustrating a flow of a first embodiment of a safety mode control of the present disclosure.
FIG. 22 is a flowchart illustrating a flow of a second embodiment of a safety mode control of the present disclosure.
FIG. 23 is a flowchart illustrating a flow of a third embodiment of a safety mode control of the present disclosure.
FIG. 24 is a graph illustrated to describe a planar motion displacement and a safety mode control according to a planar motion displacement with respect to an embodiment of FIG. 23.
FIG. 25 is a flowchart illustrating a flow of a fourth embodiment of a safety mode control of the present disclosure.
FIG. 26 is a graph illustrated to describe a planar motion displacement and a cleaning end mode control according to a planar motion displacement with respect to an embodiment of FIG. 25.

### [Mode for Invention]

Hereinafter, exemplary embodiments of the present disclosure will be described in detail with reference to the accompanying drawings.

The present disclosure may be variously modified and may have various embodiments, and particular embodiments illustrated in the drawings will be specifically described below. The description of the embodiments is not intended to limit the present disclosure to the particular embodiments, but it should be interpreted that the present disclosure is to cover all modifications, equivalents and alternatives falling within the spirit and technical scope of the present disclosure.

The terminology used herein is used for the purpose of describing particular embodiments only and is not intended to limit the present disclosure. Singular expressions may include plural expressions unless clearly described as different meanings in the context.

Unless otherwise defined, all terms used herein, including technical or scientific terms, may have the same meaning as commonly understood by those skilled in the art to which the present disclosure pertains. The terms such as those defined in a commonly used dictionary may be interpreted as having meanings consistent with meanings in the context of related technologies and may not be interpreted as ideal or excessively formal meanings unless explicitly defined in the present application.

The cleaner means a cleaning apparatus operated by the user manually. For example, the cleaner may mean a handy cleaner or a stick cleaner.

In the present embodiment, the cleaner may be configured to wet clean a surface to be cleaned using a rotating mop.

The cleaner may include a main body 400. The main body 400 includes a suction motor 430 inside, which is configured to provide a suction force to the cleaning module 100.

The main body 400 may be connected to an extension tube 200. The main body 400 may be connected to the cleaning module 100 through the extension tube 200. The main body 100 may generate the suction force by means of the suction motor 430 and provide the suction force to the cleaning module 100 through the extension tube 200. The outside dust may be introduced into the main body 400 through the cleaning module 100 and the extension tube 200.

The main body 400 forms an external appearance, and stores major constituent elements on an inside thereof. A dustbin 410, a dust separating part 420, a suction motor 430, a filter 440, a handle 450, an operating part 460, and a main battery 470 may be provided in the main body 400.

The dustbin 410 is configured to store dust. The dustbin 410 may be communicated with the dust separating part 420, and may store dust separated in the dust separating part 420.

The dust separating part 420 is communicated with the extension tube 200. The dust separating part 420 may separate the dust sucked into an inside through the extension tube 200 from the air.

The dust separating part 420 may be communicated with the dustbin 410. In more detail, the dust separating part 420 may be disposed inside the dustbin 410. Therefore, the dust separated in the dust separating part 420 may be collected in the dustbin 410 and the air is discharged outside the dust separating part 420.

The dust separating part 420 may be a cyclone configured to separate dust through the cyclonic flow.

The suction motor 430 is configured to generate a suction force for suctioning the air. The suction motor 430 is accommodated in the main body. The suction motor 430 is configured to generate a suction force by a rotation.

A filter 440 is configured to filter foreign substances contained in the flowing air. The filter 440 may include a pre-filter (not illustrated) or a HEPA filter 440.

The pre-filter is formed in a mesh shape, and filters physically big dust primarily. The pre-filter is configured to physically filter dusts bigger than a spacing of the mesh, and is a component which improves a life expectancy of other filters.

The HEPA is the abbreviation for the high efficiency particulate air filter, and is configured to filter fine dust. Generally, the HEPA filter filters fine dust by an electrtostatic force. The HEPA filter filters fine dust contained in the air which has passed through the suction motor 430 before the air is discharged outside the main body 400.

A main body handle 450 is configured to be gripped by a user. The main body handle 450 may be formed to be similar to a cylindrical shape. Alternatively, the main body handle 450 may be formed in a bent cylindrical shape.

The operating part 460 is configured to receive instructions from the user. The operating part 460 may be configured with a plurality of buttons, and the operating part 460 performs an instruction corresponding to a respective button, when the user presses a button. For example, the operating part 460 may include an operation button, and a pause button.

A main battery 470 may be disposed in the main body 400. The main battery 470 stores electric energy inside, and is configured to supply electricity to each constituent elements of the cleaner including the suction motor 430.

The main battery 470 may be separably coupled to the cleaner.

The main battery 470 may supply electricity to the cleaning module 100. Alternatively, the cleaning module 100 may be supplied with the electricity from a sub battery 300.

The extension tube 200 is configured to guide the air sucked by the cleaning module 100 to the main body 400.

The extension tube 200 has one end communicated with the cleaning module 100, and the other end communicated with the main body 400. In more detail, a rear end of the extension tube 200 is connected to the main body 400, and a front end of the extension tube 200 is connected to a cleaning module housing 110.

The extension tube 200 is formed in a long cylindrical shape.

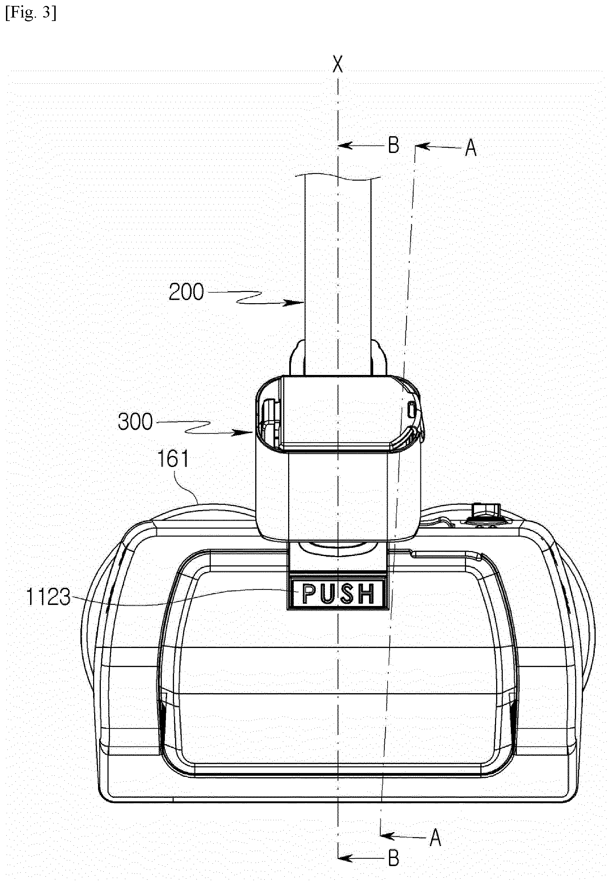

A rolling axis x is formed along a longitudinal direction of the extension tube 200. The rolling axis x is an imaginary line extending in forward and rearward directions, and the cleaning module 100 may roll about the rolling axis x. (Refer to FIG. 3)

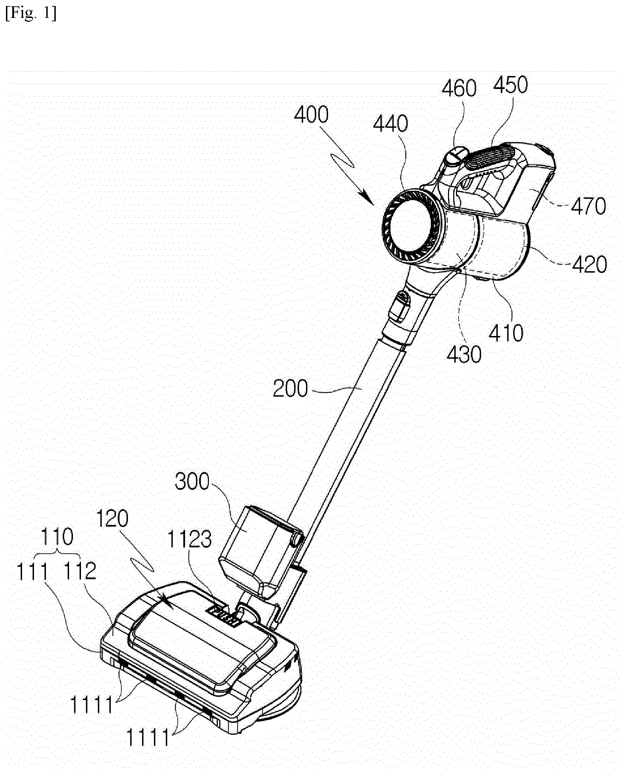

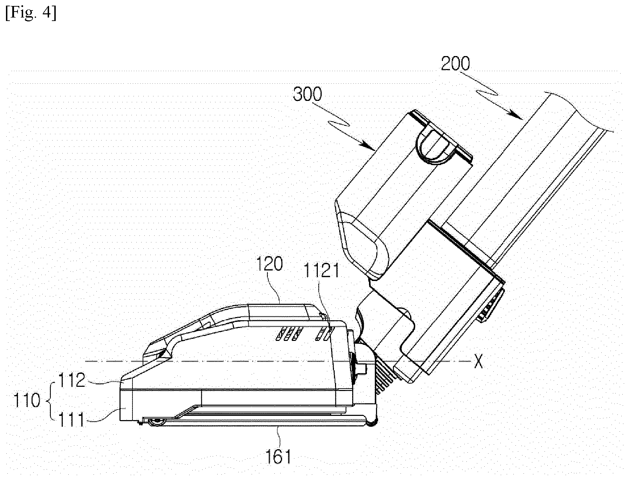

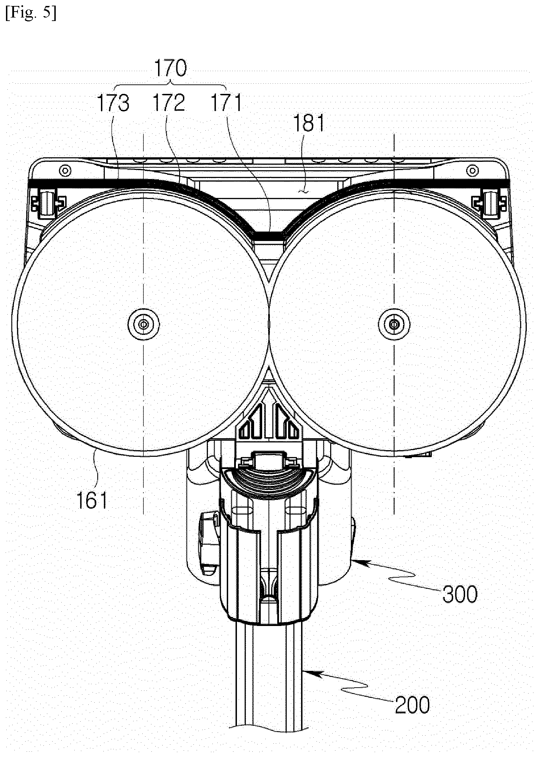

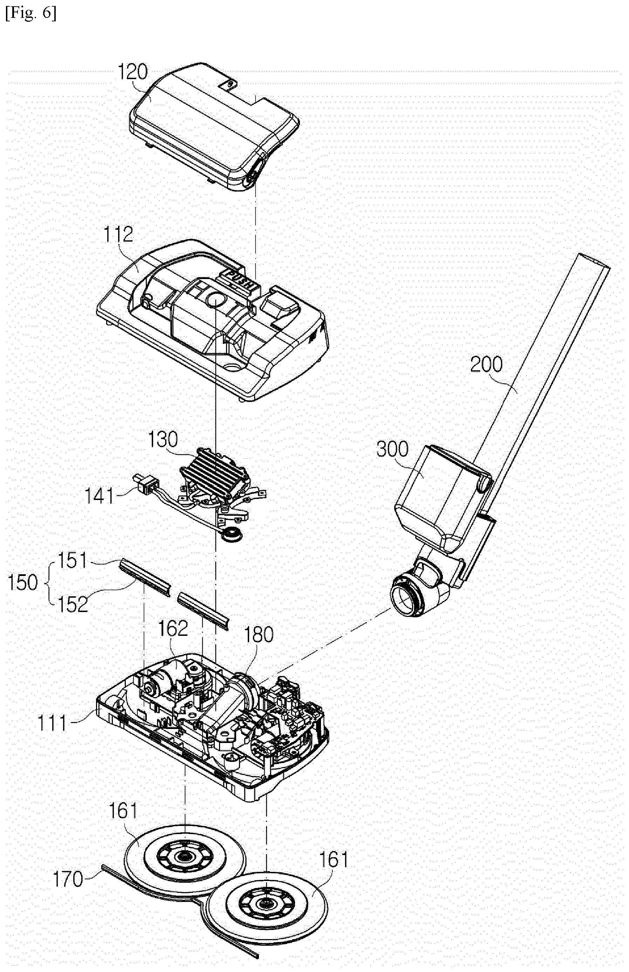

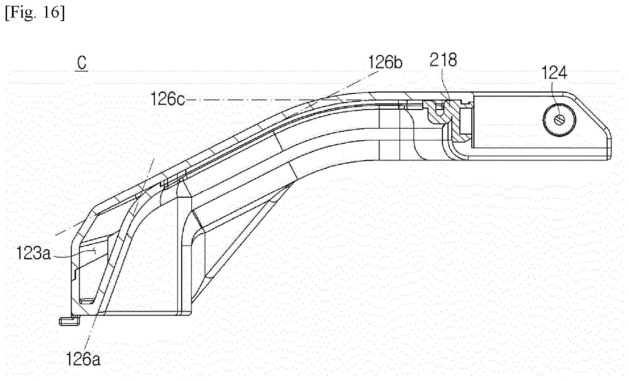

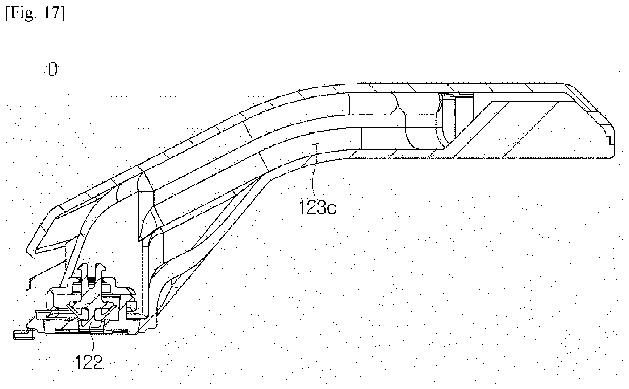

Hereinafter, referring to FIGS. 1 to 19, a detailed structure of the cleaning module 100 according to an embodiment of the present disclosure will be described.

The cleaner includes the cleaning module 100. The cleaning module 100 is configured to clean a cleaning region by sucking the outside air or generating steam.

The cleaning module 100 is connected to the main body 400. The cleaning module 100 may be directly connected to the main body 400, or may be indirectly connected to the main body through the extension tube 200. The main body 400 may be connected to an upper side of the cleaning module.

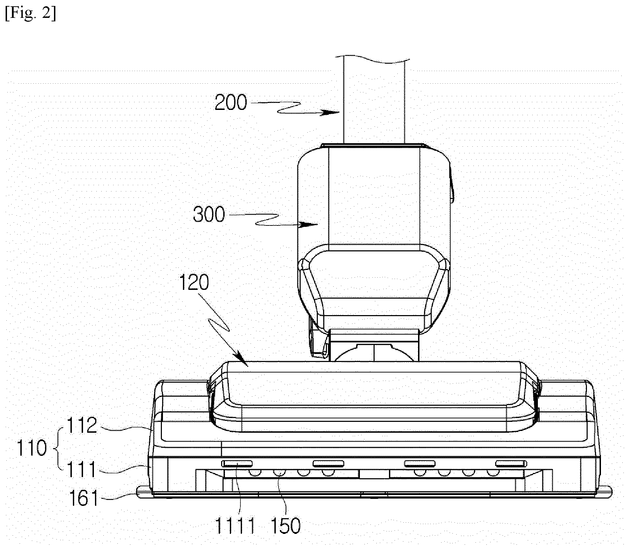

Referring to FIGS. 1 and 2, the cleaning module 100 may include at least one or more mops 161. The mop 161 may be connected to a lower side of the cleaning module 100. The mop 161 contains water, and is configured to wipe the floor to clean.

Referring to FIG. 2, the mop 161 may be provided as a pair on a right side and a left side of the cleaning module 160.

The mop 161 includes a rotation axis disposed perpendicular to the floor, and wipes the floor by rotating about the rotation axis to clean.

At this time, two or more mops 161 may rotate in different directions, thereby easing operation by the user. For example, in FIG. 2, a right mop 161 rotates in a clockwise direction (CW), and a left mop 161 rotates in a counter-clockwise direction (CCW). Therefore, the pair of mops 161 may push the cleaning module forward by the frictional force, thereby the user may move the cleaner 100 forward more easily.

The sub battery 300 is installed in the extension tube 200. In more detail, the sub battery 300 may be disposed at a front end of the extension tube 200. The sub battery 300 is electrically connected to the cleaning module 100, and supplies electricity to each constituent element disposed in the cleaning module 100.

The sub battery 300 may be electrically connected to the main battery. Therefore, the sub battery 300 may receive the electricity from the main battery.

The sub battery 300 may be series-connected to the main battery. Therefore, when the electric energy stored in the sub battery 300 is insufficient, the electricity of a sufficient voltage may be supplied to the cleaning module 100 by series-connecting the sub battery 300 and the main battery.

The sub battery 300 may be connected to the main battery in parallel. Therefore, time to be taken for supplying the electricity to the cleaning module 100 may be reduced.

The sub battery 300 may be disposed at the front end of the extension tube 200. Alternatively, the sub battery 300 may be disposed at a lower end of the extension tube 200. With this arrangement, a center of gravity of the cleaner assembly in which the cleaning module 100 and the sub battery 300 are combined is disposed at a lower portion, thereby the steering of the cleaner may be carried out easily.

The sub battery 300 may be disposed on the extension tube 200. In more detail, the sub battery 300 may be disposed at an upper position than an imaginary line extending in a longitudinal direction of the extension tube 200 from a center of the extension tube 200.

The cleaning module housing 110 forms an external appearance of the cleaning module 100, and a space for accommodating other constituent elements on an inside thereof.

The cleaning module housing 110 is connected to the main body 400. Referring to FIG. 1, the cleaning module housing 110 is connected to the front end of the extension tube 200, and a rear end of the extension tube 200 is connected to the main body 400, thereby the cleaning module housing 110 is indirectly connected to the main body 400 through the extension tube 200. Unlike this, though not illustrated, the cleaning module housing 110 may be directly connected to the main body 400.

The meaning of the above-mentioned 'connection' may be interpreted in various ways. For example, in the cleaning module housing 110, an air flow passage and the main body 400 may be connected to each other, and air containing dust may flow to the main body 400 through the cleaning module housing 110. Alternatively, the cleaning module housing 110 may be electrically connected to the main body 400, and an electric current may flow from the main battery disposed in the main body 400 to the cleaning module housing 110.

The water container 120 may be mounted on an upper surface of the cleaning module housing 110.

On a front surface of the cleaning module housing 110, an air inlet 111 is formed and allows outside air to be introduced into an inside of the cleaning module housing 110 therethrough.

In a bottom of the front surface of the cleaning module housing 110, a light emitting module 150 may be disposed to irradiate light toward a floor in a forward direction.

An air outlet 1121 may be formed on a side surface of the cleaning module housing 110 so as to discharge air inside the cleaning module housing 110 to the outside therethrough.

On a lower surface of the cleaning module housing 110, a mop 161 is disposed. The mop 161 may wipe to wet clean a floor surface.

On the lower surface of the cleaning module housing 110, a suction inlet 181 is disposed. The suction inlet 181 may suck dust on the floor to dry clean the floor.

On the lower surface of the cleaning module housing 110, a shielding member 170 may be disposed. The shielding member 170 shields a front space in which the suction inlet 181 is disposed from a rear space in which the mop 161 is disposed, thereby shielding steam released from the mop 161 from dispersing to the suction inlet 181.

The cleaning module housing 110 may be divided into an upper housing 111 and a lower housing 112.

The lower housing 112 forms a bottom surface and a part of the side surface of the cleaning module 100.

A heater 130 may be installed on an upper surface of the lower housing 111.

On a front surface of the lower housing 111, the air inlet 111 is formed.

The light emitting module 150 is formed in the lower housing 111, and a hole through which light passes is formed on the front surface thereof. The hole through which light passes is formed below the air inlet 111.

The mop 161 is disposed on a bottom surface of the lower housing 111. On one side of the bottom surface of the lower housing 111, a groove recessed upward is formed so that the mop 161 can be disposed therein.

On the bottom surface of the lower housing 111, the suction inlet 181 is disposed. The suction inlet 181 is disposed in front of the mop 161.

A plurality of constituent elements for driving the cleaning module 100 is disposed on the upper surface of the lower housing 111.

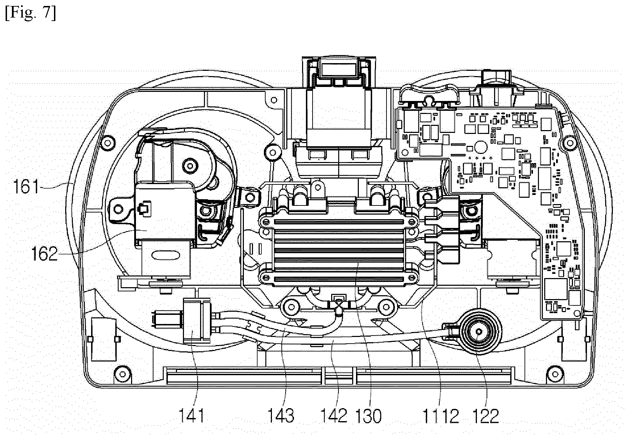

On the upper surface of the lower housing 111, a lower partition wall is formed. (Refer to FIG. 7) The lower partition wall 1112 is disposed in a periphery of the heater 130 and blocks heat dissipated from the heater 130 from dissipating to the outside.

The lower partition wall 1112 protrudes upward from the upper surface of the lower housing 111. An upper end of the lower partition wall 1112 faces a lower end of an upper partition wall 1122, and therefore, isolates an internal space in which the heater 130 is disposed from an outside space in which other elements are disposed.

On a lower surface of the lower housing 111, a shielding member insertion groove is formed. Into the shielding member insertion groove, the shielding member 170 is inserted.

The upper housing 112 forms an upper surface and a part of the side surface of the cleaning module 100.

The upper housing 112 is coupled to the lower housing 111, spaced apart from the heater 130 on an upper side of the heater 130, and allows the water container 120 to be installed on the upper surface thereof.

The air outlet 1121 is formed on a side surface of the upper housing 112.

The upper housing 112 is spaced apart from the heater 130. The heat dissipated from the heater 130 convects and reaches the upper housing 112.

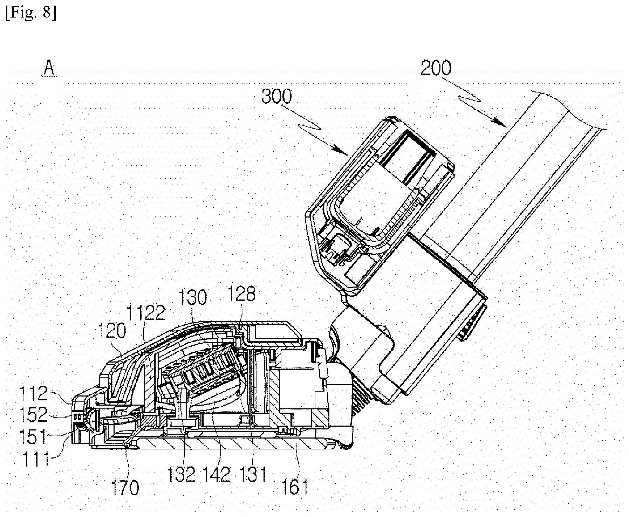

The upper partition wall 1122 is formed in the upper housing 112. (Refer to FIG. 8) The upper partition wall 1122 is disposed on an inner surface of the upper housing 112, and extends downward toward the heater 130. The upper partition wall 1122 surrounds at least a part of the side surface of the heater 130, and therefore, blocks the heat dissipated from the heater 130 from convecting in side directions.

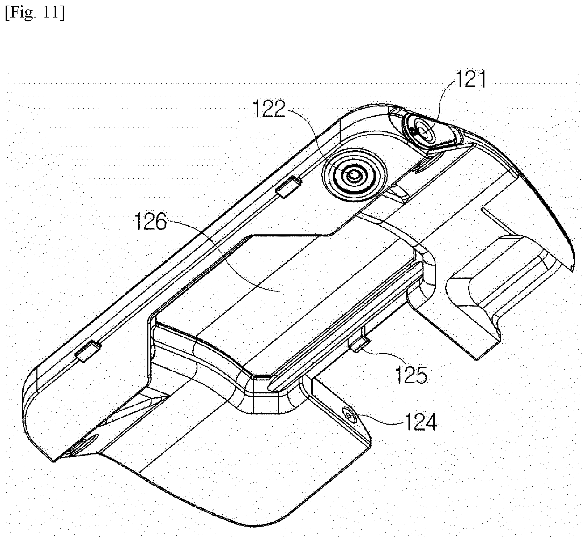

In the upper housing 112, a release button 1123 is disposed. The release button 1123 is caught by a catching hook 125 (Refer to FIG. 11) formed in the water container 120 to fix the water container 120 in position. When the release button 1123 operates, the release button 1123 descends, catching of the catching hook 125 is released and the water container 120 is removed.

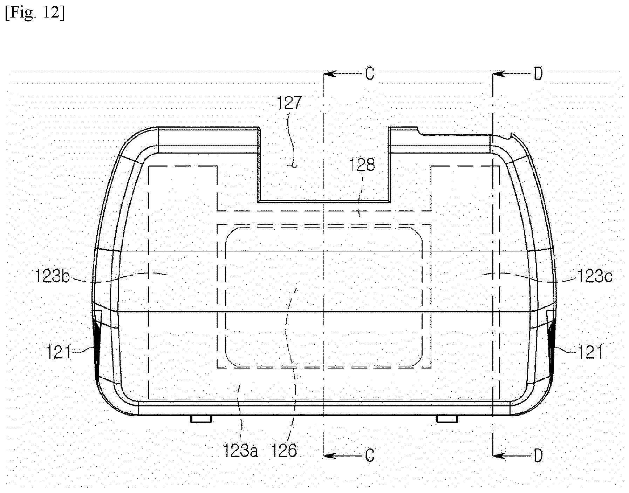

The release button 1123 may be disposed in an extension tube disposition part 127 (Refer to FIG. 12) of the water container 120.

In the upper housing 112, a thermal insulation coating surface is formed on an inner surface facing the heater 130. The thermal insulation coating surface blocks heat dissipated from the heater 130 from being delivered to the upper housing 112.

The thermal insulation coating surface is disposed in a region which is divided by the upper partition wall 1122 among the inner surface of the upper housing 112. Therefore, the thermal insulation coating surface blocks heat dissipated upward from the heater 130 from being delivered to the upper housing 112.

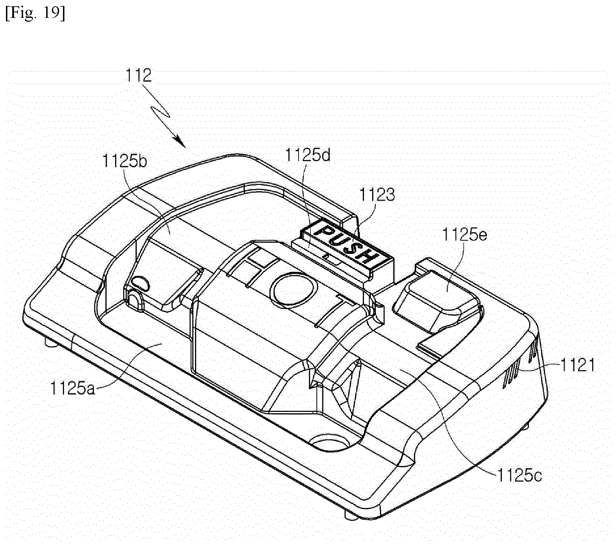

The upper housing 112 includes a water container seating portion 1125. (Refer to FIG. 19) The water container seating portion 1125 is a groove recessed downward from an upper surface of the upper housing 112. The water container 120 is seated in the water container seating portion 1125 to be installed in the upper housing 112.

The water container seating portion 1125 may be divided into storage part insertion grooves 1125a to 1125c, an air channel insertion portion 1125d, and a guide protrusion 1125e.

The storage part insertion grooves 1125a to 1125c are grooves into which a storage part 123 is inserted to be seated therein of the water container 120. When viewed from the top, the storage part insertion grooves 1125a to 1125c may be formed in a U-shape with an open rear surface.

The front storage part insertion groove 1125a is formed in the front end of the water container seating portion 1125, and extends to the left and to the right. A front storage part 123a of the water container 120 is inserted into the front storage part insertion groove 1125a to be seated therein.

The left storage part insertion groove 1125b extends rearward from a left end of the front storage part insertion groove 1125a. A left storage part 123b of the water container 120 is inserted into the left storage part insertion groove 1125b to be seated therein.

The right storage part insertion groove 1125c extends rearward from a right end of the front storage part insertion groove 1125a. A right storage part 123c is inserted into the right storage part insertion groove 1125c to be seated therein.

In a connecting portion between the front storage part insertion groove 1125a and the right storage part insertion groove 1125c, a through hole is formed at a position vertically overlapping a water drainage port 122 of the water container 120.

An air channel insertion groove 1125d is a groove into which an air channel 128 formed in the water container 120 is inserted. When the water container 120 is mounted, the air channel insertion groove 1125d is disposed to vertically overlap the air channel 128 formed in the water container 120. The air channel insertion groove 1125d extends to the left storage part insertion groove 1125b and the right storage part insertion groove 1125c.

The guide protrusion 1125e is configured to guide the water container 120 to a proper position when the water container 120 is inserted into the water container seating portion 1125. In the water container 120, a groove for inserting the guide protrusion 1125e thereinto is formed at a position corresponding to the guide protrusion 1125e.

Referring to FIG. 19, the guide protrusion 1125e is formed at a rear end of the right storage part insertion groove 1125c. Alternatively, though not illustrated, the guide protrusion 1125e may be formed at a rear end of the left storage part insertion groove 1125b.

It is preferable that the guide protrusion 1125e is formed either in the right storage part insertion groove 1125c or the left storage part insertion groove 1125b. This is to secure a storage capacity of the storage part 123 of a certain level or more.

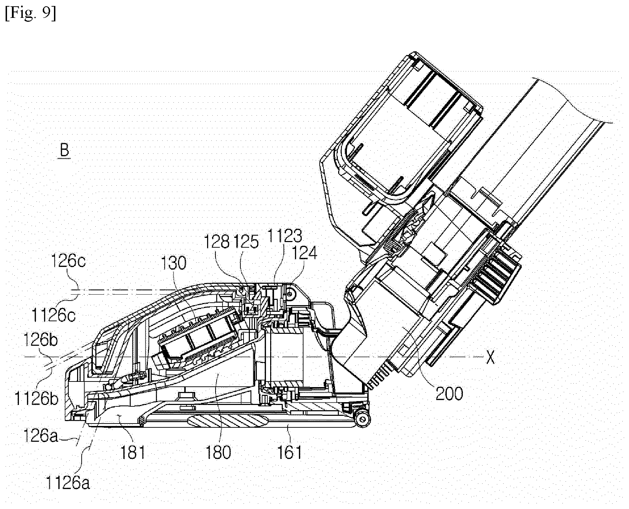

The heater disposition part 1126 is disposed in the upper housing 112. The heater disposition part 1126 of the upper housing 112 is formed to correspond to a heater disposition part 126 of the water container 120. (Refer to FIGS. 9 and 11) That is, a first inclined surface 1126a of the heater disposition part 1126 of the upper housing 112 corresponds to a first inclined surface 126a of the heater disposition part 126 of the water container 120, a second inclined surface 1126b of the heater disposition part 1126 of the upper housing 126 corresponds to a second inclined surface 126b of the heater disposition part 126 of the water container 120, and a third inclined surface 1126c of the heater disposition part 1126 of the upper housing 112 corresponds to a third inclined surface 126c of the heater disposition part 126 of the water container 120.

As the heater disposition part 1126 of the upper housing 112 is configured with the inclined surfaces 1126a to 1126c, the water droplets formed in the heater disposition part 1126 of the upper housing 112 do not fall to the heater 130, but flow down along the first inclined surface 1126a to the third inclined surface 1126c.

The heater 130 is configured to generate steam from water.

The heater 130 is disposed inside the cleaning module housing 110. In more detail, the heater 130 is installed on the upper surface of the lower housing 111.

A water inlet 131 is a hole formed at an entrance end of the heater 130. Through the water inlet 131, water is introduced into the heater 130. The water inlet 131 is connected to a heater hose 143. (Refer to FIGS. 7 and 8)

A steam outlet 132 is a hole formed at an exit end of the heater 130. Through the steam outlet 132, steam is discharged from the heater 130. The steam outlet 132 is connected to the mop 161. (Refer to FIG. 8)

The water inlet 131 is disposed at an upper position than the steam outlet 132. Therefore, water may flow from an upper side to a lower side by the gravity, and may be heated and phase-shifted into steam.

The heater 130 is disposed to incline. In more detail, the heater 130 is inclined at a regular angle with respect to the ground surface.

A rear end of the heater 130 is disposed at an upper position than a front end of the heater 130. That is, the heater 130 has a rear upward inclination. Therefore, water is heated while flowing from a rear upward direction to a front downward direction, and is phase-shifted into steam.

The water container 120 is configured to supply water to the heater 130. The water container 120 stores water, and the stored water is introduced into the heater 130, and is phase-shifted into steam.

The water container 120 is disposed in the housing. In more detail, the water container 120 is seated in the water container seating portion 1125 formed in the upper housing 112.

The water container 120 is disposed on the heater 130. In more detail, the water container 120 is spaced apart from the heater 130 on the heater 130.

The water container 120 may be disposed on the heater 130 with the upper housing 112 therebetween.

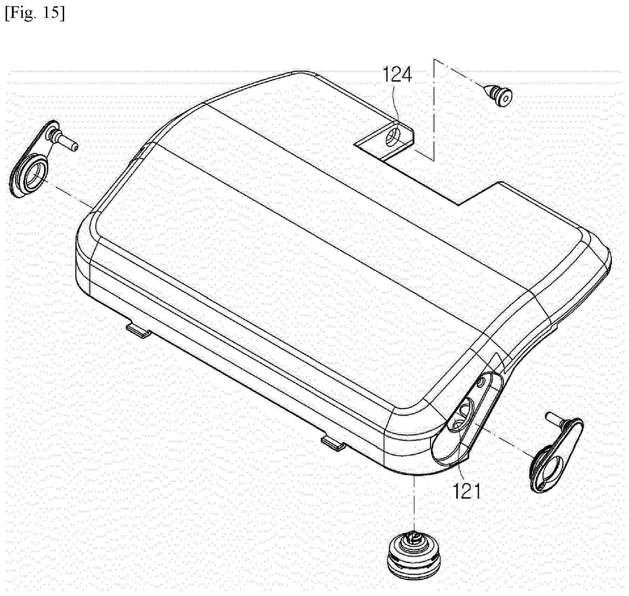

The water container 120 includes a water supply hole 121. The water supply hole 121 is a hole allowing water to be introduced into an inside of the water container 120. The water supply hole is formed on a side surface of the water container 120. (Refer to FIG. 15) The water supply hole may be formed at both sides of the water container 120.

The water container 120 includes the water drainage port 122. The water drainage port 122 is a hole through which water stored in the water container 120 is discharged. The water discharged from the water drainage port 122 flows to the heater 130. The water drainage port 122 is formed on a lower surface of the water container 120. The water drainage port 122 may be disposed in a connecting portion between the front storage part 123a and the right storage part 123c.

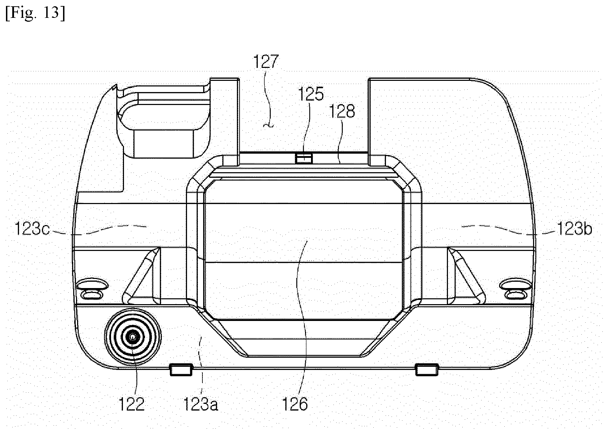

The water container 120 includes the storage part 123. The storage part 123 is an internal space of the water container 120, in which water can be stored. When the water container 120 is viewed from the top, the storage part 123 may be formed in a U-shape with an open rear side. The storage part 123 may be divided into the front storage part 123a, the left storage part 123b, and the right storage part 123c. (Refer to FIGS. 12 and 13)

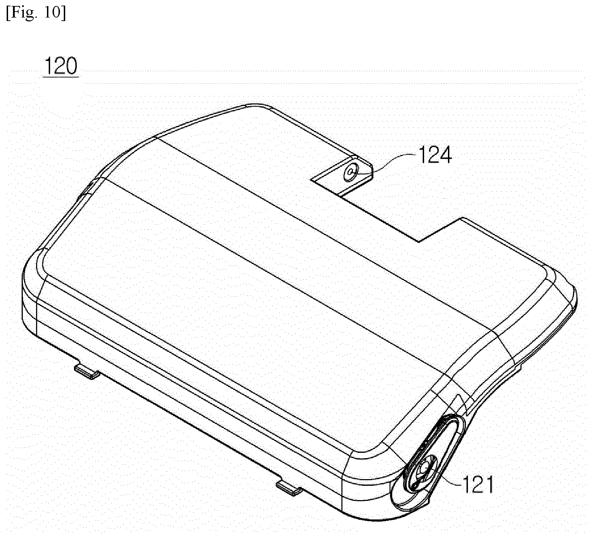

The water container includes an air hole 124. (Refer to FIG. 10) The air hole 124 is a hole allowing air to be introduced into an inside of the water container 120. When the water stored inside the water container 120 is discharged outside, a pressure inside the water container 120 falls, and in order to compensate the fallen pressure, air is introduced into the inside of the water container 120 through the air hole 124.

The air hole 124 is formed at an upper end of the water container 120. In more detail, the air hole 124 may be formed at a rear end of the left storage part 123b. Unlike this, the air hole 124 may be formed at a rear end of the right storage part 123c.

The catching hook 125 is configured to fix the water container 120 in the upper housing 112. The catching hook 125 is caught by the release button 1123 and is fixed in position.

The catching hook 125 is formed at a rear end of the water container 120. In more detail, the catching hook 125 is formed adj acent to the extension tube disposition part 127. (Refer to FIG. 11)

The heater disposition part 126 is configured to form a space into which at least a part of the heater 130 is inserted. The heater disposition part 126 is a surface, which vertically overlaps the heater 130, of the lower surface of the water container 120.

Referring to FIG. 11, the heater disposition part 126 is recessed upward from the lower surface of the water container 120. Since at least a part of the heater 130 is inserted into the recessed groove of the heater disposition part 126, a height of the cleaning module 100 may be more lowered.

The heater disposition part 126 may be formed in a shape similar to a quadrangle. In more detail, the heater disposition part 126 may be formed in a shape of a quadrangle, and may be formed with each edge which is not bent, but a curved surface.

The storage part 123 may be formed in a U-shape, and the heater disposition part 126 may be surrounded by the storage part 123. With this arrangement, heat dissipated upward from the heater 130 may be blocked by the heater disposition part 126, and heat dissipated in side directions from the heater 130 may be blocked by the storage part 123.

When viewed from the top, an area projected to the ground surface from the heater disposition part 126 is greater than an area projected to the ground surface from the heater 130. With this arrangement, the droplets formed in the heater disposition part 126 do not fall to the heater 130, but fall to the outside of the heater 130. Therefore, performance deterioration caused by the droplets fallen to the heater 130 can be prevented.

Referring to FIG. 9, the heater disposition part 126 may be divided into a plurality of inclined surfaces. In more detail, the heater disposition part 126 includes the first inclined surface 126a, the second inclined surface 126b, and the third inclined surface 126c.

The first inclined surface 126a extends rearward from one side of the lower surface of the water container 120, and a rear end thereof is disposed at an upper position than a front end thereof. That is, the first inclined surface 126a has a rear upward inclination.

Referring to FIG. 11, the lower surface of the water container 120 may have a plane in which the water drainage port 122 is disposed, and the first inclined surface 126a extends rearward from a rear end of the plane.

The second inclined surface 126b extends rearward from a rear end of the first inclined surface 126a, and a rear end thereof is disposed at an upper position than a front end thereof. That is, the second inclined surface 126b has a rear upward inclination.

The third inclined surface 126c extends rearward from a rear end of the second inclined surface 126b. Referring to FIG. 9, the third inclined surface 126c may be formed as a plane parallel to the ground surface, however, unlike the illustration in FIG. 9, the third inclined surface 126c may have a rear upward inclination.

The slope is defined as an angle of the inclined surface with respect to the ground surface. The slope of the second inclined surface 126b is smaller than the slope of the first inclined surface 126a. The slope of the third inclined surface 126c is smaller than the slope of the second inclined surface.

With this arrangement, the droplets formed on the third inclined surface fall along the second inclined surface 126b and the first inclined surface 126a, and do not fall to the heater 130, and therefore, there is an effect of preventing deterioration of the performance of the heater 130.

The heater 130 is disposed to be inclined from the ground surface, and the water container 120 includes the inclined surface disposed to be parallel to an upper surface of the heater 130. In more detail, referring to FIG. 9, the second inclined surface 126b may be disposed to be parallel to the heater 130. With this arrangement, heat dissipated in a vertical direction of the upper surface from the upper surface of the heater 130 reaches the second inclined surface 126b evenly, and may evenly heat the second inclined surface 126b. Therefore, there is an effect of preventing one side of the water container 120 from being overheated and damaged.

The water container 120 includes the storage part 123 in which water is stored. The storage part 123 may be divided into the front storage part 123a, the left storage part 123b, and the right storage part 123c.

The front storage part 123a is disposed at the front end of the water container 120, and extends to the left and the right.

The front storage part 123a blocks heat dissipated forward from the heater 130 from dissipating in a forward direction of the cleaning module 100.

The left storage part 123b extends rearward from a left end of the front storage part 123a along a left surface of the water container 120.

The left storage part 123b blocks heat dissipated in a left direction from the heater 130 from dissipating in a left direction of the cleaning module 100.

The right storage part 123c extends rearward from a right end of the front storage part 123a along a right surface of the water container 120.

The right storage part 123c blocks heat dissipated in a right direction from the heater 130 from dissipating in a right direction of the cleaning module 100.

The front storage part 123a, the left storage part 123b, and the right storage part 123c form a U-shape having an open rear side when viewed from a top. The cleaning module 100 is based on an assumption of cleaning while moving forward, therefore, it is not necessary to cool a rear side of the heater. Therefore, it is preferable that the front storage part 123a, the left storage part 123b, and the right storage part 123c form a U-shape which surrounds the front, the left and the right sides.

A cross-sectional area of the front storage part 123a when viewed from the right side may be formed to be smaller than a cross-sectional area of the left storage part 123b when viewed from the front side, or than a cross-sectional area of the right storage part 123c when viewed from the front side. This is to make a length of the cleaning module 100 in forward and rearward directions be smaller. However, with this arrangement, there may occur an imbalance between the water levels of the left storage part 123b and the right storage part 123c, and the air channel 128 may be formed to address this problem.

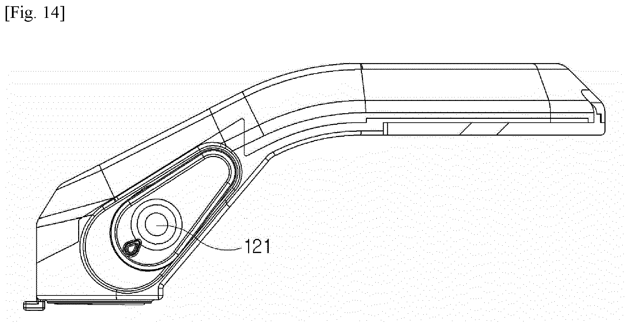

When viewed from one side, at least one among the left storage part 123b and the right storage part 123c has a front end disposed at a lower position than a rear end thereof. Referring to FIG. 14, the right storage part 123c of the water container 120 has a front end disposed at a lower position than a rear end, and though not illustrated, the left storage part 123b of the water container 120 has a front end disposed at a lower position than a rear end thereof. With this configuration, air pockets are formed at rear ends of the left storage part 123b and the right storage part 123c.

The storage part 123 surrounds at least two or more side surfaces among four side surfaces in four directions of the heater 130. In more detail, the front storage part 123a is disposed in front of the heater 130, the left storage part 123b is disposed on a left side of the heater 130, and the right storage part 123c is disposed on a right side of the heater 130, therefore, the storage part 123 surrounds three side surfaces of the heater 130. With this arrangement, the storage part 123 blocks heat dissipated in side directions from dissipating outside the cleaning module 100.

The water drainage port 122 is formed in at least one among the connecting portion between the front storage part 123a and the left storage part 123b and the connecting portion between the front storage part 123a and the right storage part 123c. Referring to FIG. 11, the water drainage port 122 is formed in the connecting portion between the front storage part 123a and the right storage part 123c. Unlike this, the water drainage port 122 may be formed in the connecting portion between the front storage part 123a and the left storage part 123b.

The water drainage port 122 is connected to a tank hose 142. An entrance end of the tank hose 142 is connected to the water drainage port 122, and an exit end of the tank hose 142 is connected to a feedwater pump 141. Water stored in the water container 120 flows to the tank hose 142 by the gravity, and is pressure-fed to the heater 130 through the heater hose 143 by the feedwater pump 141.

When water is discharged, the air hole 124 forms a passageway, into which the outside air is introduced by a negative pressure. That is, when the water stored inside the water container 120 is discharged outside, a pressure inside the water container 120 drops, and as air is introduced into the inside of the water container 120 through the air hole 124 so as to compensate the dropped pressure, the air pocket is formed.

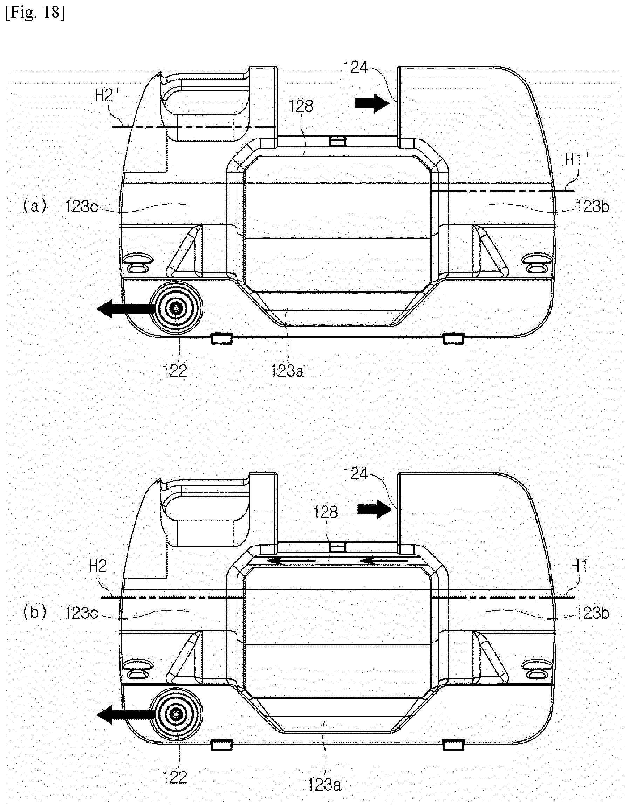

The air hole 124 is alternatively formed in one among the left storage part 123b and the right storage part 123c. The air hole 124 forms the air pocket in one among the left storage part 123b and the right storage part 123c. In the storage part 123 in which the air hole 124 is not formed, among the left storage part 123b and the right storage part 123c, the air pocket is formed by the air hole 128. For example, referring to FIG. 18, the air hole 124 is formed in the left storage part 123b, the air pocket is formed primarily in the left storage part 123b, and since a part of the air forming the air pocket flows to the left storage part 123c through the air channel 128, the air pocket is formed secondarily in the right storage part 123c, thereby the water levels of the left storage part 123b and the right storage part 123c correspond to each other.

If the air channel 128 is not formed in the water container, the air hole 124 must be formed both in the left storage part 123b and the right storage part 123c.

The water drainage port 122 is formed in the front end of the water container 120, and the air hole 124 is formed in the rear end of the water container 120. That is, the water stored in the water container 120 is discharged to the front end of the water container 120 while flowing in the forward direction, and the air is diffused in the forward direction while being introduced into the rear end of the water container 120.

A part of an upper surface of the water container 120 is parallel to the ground surface and the air hole 124 and the air channel 128 are formed along the upper surface of the water container 120. Referring to FIG. 9, an upper end of the air channel 128 may be disposed at an upper position than an upper end of the air hole 124. With this arrangement, if the air pocket is formed in the left storage part 123b, the air can instantly move to the right storage part 123c by the air channel 128, and the air pocket may be formed rapidly in the right storage part 123c.

When viewed from the top, based on an imaginary line dividing the water container 120 in the left and right directions, the air hole 124 is disposed in a direction opposite to the water drainage port 122. Referring to FIG. 12, the imaginary line dividing the water container 120 in the left and right directions is a cross-sectional line C-C, and corresponds to the rolling axis x of the cleaning module 100. Referring to FIGS. 12 and 13, when viewed from the top, the water drainage port 122 is disposed on a right side of the rolling axis and the air hole 124 is disposed on a left side of the rolling axis. With this configuration, the air hole 124 and the water drainage port 122 are disposed farthest from the storage part 123, therefore, there is an effect of discharging all the water stored inside the water container 120 without a loss.

Unlike the illustration in FIGS. 12 and 13, when viewed from the top, based on the imaginary line dividing the water container 120 to the left and the right, the air hole 124 may be disposed in the same direction as a direction of the water drainage port 122.

The water supply hole 121 is a hole configured to allow the water to be supplied to the water container 120 to pass therethrough. Refer to FIG. 10)

The water supply holes 121 are formed at both sides of the water container 120.

After closing a left water supply hole 121 and opening a right water supply hole 121, water can be supplied to the right water supply hole 121.

Alternatively, after closing the right water supply hole 121 and opening the left water supply hole 121, water can be supplied to the left water supply hole 121.

Alternatively, after making the front end of the water container 120 be disposed at an upper position, the rear end of the water container 120 be disposed at a lower position, and opening both water supply holes 121, water can be supplied to any one water supply hole 121. In this case, water is supplied to any one water supply hole 121 and at the same time, air is discharged through the other water supply hole 121, water can be rapidly supplied.

A cap is installed in the water supply hole 121, and water can be supplied to the water supply hole 121 after removing the cap. The cap may be formed of an elastic material such as rubber and the like.

Referring to FIG. 12, the extension tube disposition part 127 forms a space into which at least a part of the extension tube is inserted. As the extension tube disposition part 127 is formed in the water container 120, there is an effect of decreasing a length from the front end to the rear end of the cleaning module 100.

The extension tube disposition part 127 is formed to be recessed forward from one side of the rear surface of the water container 120.

The extension tube disposition part 127 is disposed on a right side of the left storage part 123b, a left side of the right storage part 123c, and a rear side of the heater disposition part 126.

The air channel 128 is configured to adjust the water levels of the left storage part 123b and the right storage part 123c. The air channel 128 is disposed on the rear side of the front storage part 123a, and connects the left storage part and the right storage part 123c.

For example, if the air hole 124 is formed in the left storage part 123b, the air pocket is formed in the left storage part 123b. At this time, according to the related art, referring to FIG. 18a, as air is introduced into the left storage part 123b, the water level of the left storage part 123b is lowered to H1', while the water level of the right storage part 123c is maintained to be at H2' since the air pocket is not formed, and the center of gravity of the cleaning module may be tilted toward the right storage part 123c. Further, depending on cases, a vacuum may be formed in the right storage part 123c.

On the contrary, according to the present disclosure, referring to FIG. 18b, air of the air pocket in the left storage part 123b moves to the right storage part 123c through the air channel 128, and forms the air pocket in the right storage part 123c. Therefore, there is an effect of maintaining the water level H1 of the left storage part and the water level H2 of the right storage part to be maintained the same.

The air channel 128 is disposed at an upper end of the storage part 123. An upper surface of the water container 120 may be formed as a plane parallel to the ground surface, and the air channel 128 may be formed on the upper surface of the water container 120.

When viewed from a side direction, the air channel 128 is disposed between the water drainage port 122 and the air hole 124.

The feedwater pump 141 is configured to flow water inside the cleaning module 100. The feedwater pump 141 pressure-feeds water inside the water container 120 to the heater 130 by pressing the water. An entrance end of the feedwater pump 141 is connected to an exit end of the tank hose 142, and an exit end of the feedwater pump 141 is connected to the heater hose 143.

The tank hose 142 connects the water container 120 and the feedwater pump 141 to each other. The tank hose 142 guides water stored in the water container 120 to the feedwater pump 141.

The heater hose 143 connects the feedwater pump 141 and the heater 130 to each other. The heater hose 143 guides water pressed by the feedwater pump 141 to the heater 130.

The light emitting module 150 is configured to illuminate the front of the cleaning module 100 and identify foreign substances present in front of the cleaning module 100. The light emitting module 150 irradiates light to the front floor of the cleaning module 100.

The light emitting module 150 may be disposed behind the air inlet 1112. With this arrangement, the light emitting module 150 may be cooled by the air introduced from the air inlet 1112.

The light emitting module 150 may be disposed in plurality along the front surface to the left or to the right.

The light emitting module 150 may be configured with a light emitting member 151 and a diffuser plate 152.

The light emitting member 151 may be configured with a plurality of LEDs. The light emitting member 151 may irradiate light forward or downward.

The diffuser plate 152 is disposed in a forward direction of the light emitting member 151, and diffuses light irradiated from the light emitting member 151.

A mop assembly 160 is configured to clean a floor surface with water or steam. The mop assembly 160 is supplied with steam from the heater 130, and wet cleans the floor surface using friction and steam.

The mop assembly 160 may be configured with the mop 161 and a mop motor 162.

The mop 161 is disposed on a lower surface of the lower housing 111. In more detail, in the lower housing 111, grooves recessed upward are formed so that the mop 161 can be disposed therein, and the mop 161 is installed in the lower housing 111 such that at least a part of the mop 161 is inserted into the groove.

The mop 161 may be in a circular shape when viewed from the top. At the center of the mop 161, a rotation axis that vertically extends is formed. The mop 161 may clean the floor surface using friction while rotating about the rotation axis.

The mop 161 may be disposed as a pair disposed on left and right sides about the rolling axis x.

The mop motor 162 is connected to the mop 161 and is configured to rotate the mop 161. The mop motor 162 is disposed above the mop 161, and is disposed on the rotation axis of the mop 161.

The mop motor 162 is disposed on the upper surface of the lower housing 111.

The mop motor 162 is disposed to correspond to the quantity of the mops 161. The mop motor 162 may be provided as a pair disposed on the left and the right sides about the rolling axis x.

The mop motor 162 is disposed in a side direction of the heater 130. The upper partition wall 1122 or the lower partition wall 1112 is disposed between the mop motor 162 and the heater 130, and blocks heat of the heater 130 from being delivered to the mop motor 162.

The shielding member 170 shields a front space in which the suction inlet 181 is disposed from a rear space in which the mop 161 is disposed, thereby shielding steam released from the mop 161 from dispersing to the suction inlet 181.

A dust flow passage 180 is a flow passage through which air containing dust flows inside the cleaning module 100. An entrance end of the dust flow passage 180 is connected to the suction inlet 181, and an exit end of the dust flow passage 180 is connected to the extension tube 200.

The suction inlet 181 is a hole into which dust and air present in the cleaning region is introduced to flow to the inside of the cleaning module 180.

The suction inlet 181 is formed in a front end of the lower surface of the lower housing 111. The suction inlet 181 is disposed between the left mop 161 and the right mop 161.

A PCB 190 is a board on which a control unit 195 for controlling the cleaning module 100 is disposed, the electric current can flow, and the communication lines can be placed.

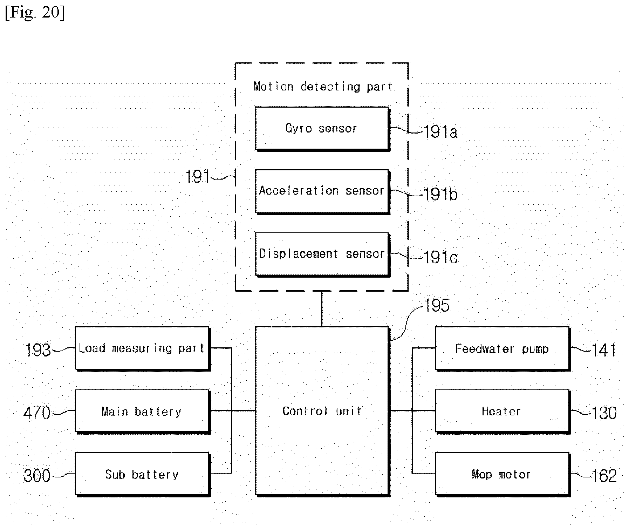

According to an embodiment of the present disclosure, the control unit 195 may perform a safety mode control according to a motion of the cleaning module 100. The safety mode control is configured for the purpose of preventing burns to the user, or damage to the flooring which is a surface to be cleaned by ensuring high temperature water not to splash. This will be described with reference to FIG. 20 below.

The PCB 190 and components installed on the PCB 190 have the characteristic of being vulnerable to heat, and can be cooled by air introduced into the air inlet 1111 and being discharged through the air outlet 1121.

Advantages of the cleaner according to the present disclosure configured as above are described as below.

The water container 120 is disposed on the heater 130, and is spaced apart from the heater 130. Heat dissipated from the heater 130 has a characteristic of rising, and since the water container 120 is disposed on the heater 130, the water container 120 prevents heat from dissipating upward of the cleaning module 100. Further, since the water container 120 is spaced apart from the heater 130, and heat dissipated from the heater 130 is convected to the water container 120 and then transferred by conduction, there is an advantage that the user does not get burned even if he or she comes into contact with the cleaning module 100.

The water container 120 is recessed upward from the lower surface, and includes the heater disposition part 126, into which at least a part of the heater 130 is inserted. There is a concern of the height of the cleaning module being increased since the water container 120 is disposed in the cleaning module 100, however, since at least a part of the heater 130 is inserted into the heater disposition part 126, there is an advantage of becoming capable of easily cleaning a narrow gap by lowering the height of the cleaning module 100 more.

The water container 120 includes the front storage part 123a, the left storage part 123b, and the right storage part 123c, and the storage part 123 is disposed to surround three side surfaces of the heater 130. Therefore, there is an advantage that the heat dissipated in side directions is absorbed by the storage part 123 and does not overheat nearby electronic devices.

The water container 120 provides the air channel 128 connecting the left storage part 123b and the right storage part 123c to each other. Referring to FIG. 18b, there is also an advantage that the center of gravity of the cleaning module 100 always positions at the center, since even if the air hole 124 is formed only in the left storage part 123b, the air in the air pocket formed in the left storage part 123b moves to the right storage part 123c through the air channel 128 and forms an air pocket in the right storage part 123c, and the water level H1 of the left storage part and the water level H2 of the right storage part correspond to each other.

The first inclined surface 126a and the second inclined surface 126b of the heater disposition part 126 form front downward inclined surfaces. Therefore, dews formed in the heater disposition part 126 do not fall to the heater 130, but fall to the front end of the water container 120 along the inclined surfaces. Similarly, dews formed in the first inclined surface 126a and the second inclined surface of the upper housing 112 fall to the front end of the upper housing 112 along the inclined surfaces. Therefore, the present disclosure also has an advantage of maximizing the performance of the heater 130 by preventing the problem of unnecessary cooling of the heater 130 due to the dews falling to the heater 130.

Hereinafter, referring to FIGS. 20 to 26, a configuration related to the safety mode control of the cleaning module 100 according to an embodiment of the present disclosure will be described.

Referring to FIG. 20, the cleaning module 100 may include a motion detecting part 191.

The motion detecting part 191 may detect a motion of the cleaning module 100. There are cases where the user lifts the cleaning module 100 for changing a direction while cleaning the surface to be cleaned with the cleaner. Or, there are cases where the user lifts the cleaning module 100 to change a place to clean, for example, to clean a room while cleaning a living room. At this instance, the cleaning module 100 may be spaced apart from the surface to be cleaned, and an angle with respect to the surface to be cleaned may tilt. The motion detecting part 191 may be configured to detect such a motion of the cleaning module 100.

The motion detecting part 191 may include one or more sensors for detecting a motion of the cleaning module 100.

Postures among the motions of the cleaning module 100 may be a roll, a pitch, and a yaw. A yaw may mean a rotational direction of a z axis, a roll may mean a rotation in left and right directions, and a pitch may mean a direction of a tilt. How tilted the cleaning module 100 is may be expressed using a roll and a pitch.

In some possible embodiments, the motion detecting part 191 may include a sensor which detects an angle at which the cleaning module 100 tilts with respect to the surface to be cleaned (hereinafter, a tilt angle).

The sensor which detects the tilt angle of the cleaning module 100 may be a gyro sensor 191a. The gyro sensor 191a may be installed in the cleaning module housing 110. The gyro sensor 191a may be installed in the lower housing 111. The gyro sensor 191a may be installed in the upper housing 112.

As well-known, the gyro sensor 191a measures an angular velocity. The angular velocity means an angle of a rotation per hour, for example, the angular velocity of an object in a horizontal posture is 0°/sec because the object is in a paused state, and in an assumption that the object tilts by 50°for 10 seconds, the object has the angular velocity which is not 0°/sec for the said 10 seconds, and an average angular velocity for the said 10 seconds is 5°/sec. When the object pauses and maintains 50°after performing a tilt motion, the angular velocity is 0°/sec again. At this instance, by integrating the angular velocity of the object over the entire time, the tilt angle is calculated.

The sensor which detects the tilt angle of the cleaning module 100 may be an acceleration sensor 191b. The acceleration sensor 191b may be installed in the cleaning module housing 110. The acceleration sensor 191b may be installed in the lower housing 111. The acceleration sensor 191b may be installed in the upper housing 112.

As well known, the acceleration sensor 191b measures a tilt angle of an object based on a gravitational acceleration. The gravitational acceleration of the terrestrial gravity is 1G in a vertical direction, and when the acceleration sensor 191b positioned horizontally tilts, and reacts to the gravity, an angle of 90°is formed, that is, a perpendicular angle is formed, then, 1G is detected as the gravitational acceleration thereof. Therefore, the gravitational acceleration may be calculated as a relation of sin(θ), for example, when the gravitational acceleration of 0.5G is measured, the tilt angle θ may be calculated as 30°.

In some possible embodiments, for the purpose of detecting the tilt angle of the cleaning module 100, both the gyro sensor 191a and the acceleration sensor 191b may be used. When using both the gyro sensor 191a and the acceleration sensor 191b, values of a roll or a pitch may be calculated by applying an algorithm which can compensate shortcomings of each of the sensors. For example, a Kalman filter may be used for the compensation or filtering. In addition, the gyro sensor 191a has a characteristic in that a value of which is changed according to a temperature, therefore, in order to precisely measure a motion of the cleaning module 100, a temperature sensor (not illustrated) may be further used for correcting a temperature error.

In the present disclosure, as the sensors which detect the tilt angle, the gyro sensor 191a and the acceleration sensor 191b are described as examples, however, it is apparent from a viewpoint of those skilled in the art that another known sensor may be used.

The motion detecting part 191 may include a sensor for detecting a planar motion displacement among motions of the cleaning module 100. In more detail, the motion detecting part 191 may include a displacement sensor 191c which detects a planar motion displacement of the cleaning module 100 with which the cleaning module 100 travels in a state of contacting the surface to be cleaned.

As the displacement sensor 191c, an optical flow sensor (OFS) which obtains image information of the floor surface using light may be used. The optical flow sensor (OFS) includes an image sensor which obtains image information of the floor surface by capturing an image of the floor surface, and one or more light sources which adjust an amount of light. The optical flow sensor may be installed in the cleaning module housing 110. It is preferable that the optical flow sensor is installed on a lower surface of the lower housing 111 so that the optical flow sensor can capture the surface to be cleaned.

As well known, the optical flow sensor captures a bottom, that is, the surface to be cleaned, while the cleaning module 100 travels. The optical flow sensor generates a certain type of a bottom view by converting a bottom view input from the image sensor. In this way, a relative position between a certain point and the cleaning module 100, that is, the planar motion displacement may be detected. The certain point may be a position of the cleaning module 100 at a previous capture time.

In the present disclosure, as the displacement sensor 191c, the optical flow sensor is described as an example, however, it is apparent from a viewpoint of those skilled in the art that another known sensor may be used.

Referring to FIG. 20 again, the cleaning module 100 may include a load measuring part 193.

The load measuring part 193 is provided to measure a rotational load of the mop 161. The rotational load of the mop 161 may be measured by a rotational speed of the mop motor 162. The load measuring part 193 may be installed in the cleaning module housing 110. The load measuring part 193 may be electrically connected to the mop motor 162 and measure an output current of the mop motor 162.

In more detail, reduction of the rotational speed of the mop motor 162 means that a torque of the mop motor 162 is increased and accordingly, the output current of the mop motor 162 which rotates the mop 161 is increased. That is, if measuring the output current of the mop motor 162, the rotational speed and the rotational load of the mop motor 162 may be measured.

At this instance, the measurement of the output current may be performed in various manner. For example, the load measuring part 193 may measure the output current by measuring a both-end voltage value of a shun resistor which is series-connected to the mop motor 162, and converting the voltage value into a current value according to the Ohm principle.

When the user lifts the cleaning module 100 to move the cleaning module 100, the mop 161 is spaced apart from the surface to be cleaned, and the rotational load of the mop 161 caused by the frictional force applied between the mop 161 and the surface to be cleaned is dramatically reduced. At this instance, the output current of the mop motor 162 measured by the load measuring part 193 is increased, thereby a state in which the cleaning module 100 is spaced apart from the surface to be cleaned can be detected from the output current.

In an embodiment, the control unit 195 may control the cleaning module 100 in the safety mode when the control unit 195 determines that the cleaning module 100 is spaced apart from the surface to be cleaned while the user cleans the surface to be cleaned with the cleaner.

At this instance, it is characterized that determination on whether the cleaning module 100 is spaced apart from the surface to be cleaned is made by using both the tilt angle detected by the motion detecting part 191 and the output current measured by the load measuring part 193.

In more detail, the control unit 195 may determine that the cleaning module 100 is spaced apart from the surface to be cleaned when the motion detecting part 191 detects that the cleaning module 100 tilts at a threshold angle or more with respect to the surface to be cleaned, or the load measuring part 193 detects that the rotational load is reduced to a threshold magnitude or less.

If the cleaning module 100 determines that the cleaning module 100 is spaced apart from the surface to be cleaned based only on the tilt angle of the cleaning module 100, the accuracy of the determination decreases in a state in which the user lifts the cleaning module 100 while maintaining the cleaning module 100 horizontally with respect to the surface to be cleaned.

In addition, if determining that the cleaning module 100 is spaced apart from the surface to be cleaned based only on the rotational load of the mop 161, the accuracy of the determination decreases in a state in which the water content rate is high and the friction between the surface to be cleaned and the mop 161 is weak.

Therefore, when using both the tilt angle of the cleaning module 100 and the rotational load of the mop 161 as the basis for the determination, the accuracy of the determination may increase. That is, even in the state in which the user lifts the cleaning module 100 while maintaining the cleaning module 100 horizontally with respect to the surface to be cleaned, and the state in which the water content rate is high and the friction between the surface to be cleaned and the mop 161 is weak, whether the cleaning module 100 is spaced apart from the surface to be cleaned can be accurately determined.

In other words, the control unit 195 may receive both the tilt angle of the cleaning module 100 from the motion detecting part 191 and the output current of the mop motor 162 from the load measuring part 193, and control the cleaning module 100 in the safety mode when at least one of the tilt angle or the output current is outside of a preset range, thereby the accuracy of the safety mode control is improved.

At this instance, the safety mode control according to the above-mentioned embodiment means a stopping operation of at least one among the heater 130, the feedwater pump 141, and the mop motor 162, which are installed in the cleaning module 100.

The control unit 195 may include all kinds of devices which can handle data such as a processor. Here, the term 'processor' may indicate, for example, a data-processing device embedded in hardware, which has a circuit physically structured for performing functions represented as code or instructions included in a program.

In another embodiment, the control unit 195 may control the cleaning module 100 in the safety mode when detecting that the cleaning module 100 is in a state in which the cleaning module 100 is not moved from the surface to be cleaned while the user cleans the surface to be cleaned using the cleaner.

At this instance, the safety mode control according to the above-mentioned another embodiment means a stopping operation of all the heater 130, the feedwater pump 141, and the mop motor 162, which are installed in the cleaning module 100.

At this instance, it is characterized that determination on whether the cleaning module 100 is not moved from the surface to be cleaned is made by using the planar motion displacement detected by the motion detecting part 191.

In more detail, the control unit 195 may determine that the cleaning module 100 is not moved from the surface to be cleaned when a certain time elapses in a state in which the planar motion displacement of the cleaning module 100 detected by the motion detecting part 191, during the cleaning operation, is equal to or smaller than a preset threshold displacement.

The preset threshold values (the threshold angle with respect to the tilt angle, the threshold magnitude with respect to the rotational load, the threshold displacement with respect to the planar motion displacement, the threshold time, and the like) which are repeatedly mentioned in the present disclosure may be stored in a storing part (not illustrated) embedded in the cleaning module 100. The storing part may be embedded in the control unit 195, or may be mounted on the PCB 100 as a separate component from the control unit 195.

The storing part is a part in which various information necessary for the operation of the cleaning module 100 are stored and a volatile or nonvolatile recording medium. The storing part may include magnetic storage media or flash storage media, but the scope of the present disclosure is not limited thereto. The storing part may include an internal memory and an external memory, and may include: a volatile memory such as a DRAM, SRAM, or SDRAM; a non-volatile memory such as a one time programmable ROM (OTPROM), PROM, EPROM, EEPROM, mask ROM, flash ROM, NAND flash memory, or NOR flash memory; and a storage device such as an HDD or a flash drive such as an SSD, compact flash (CF) card, SD card, micro-SD card, mini-SD card, XD card, or a memory stick.

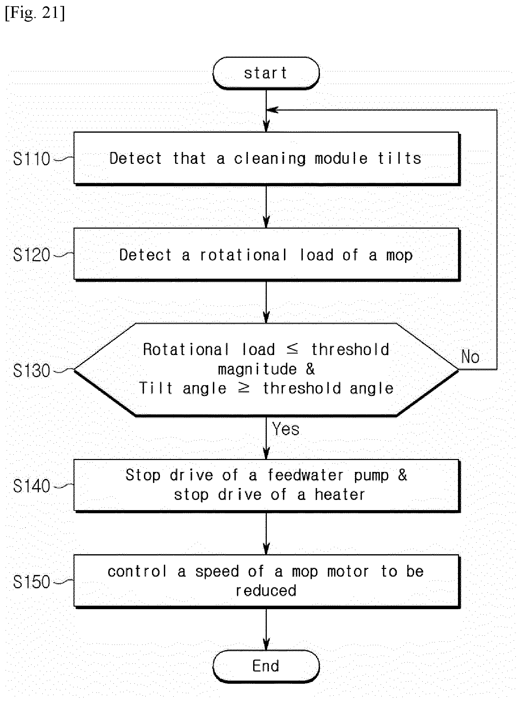

Hereinafter, with reference to FIGS. 21 to 24, various embodiments of the present disclosure will be described in detail with distinctions of the embodiments.

First, referring to FIG. 21, a first embodiment of the safety mode control will be described.

When the tilt angle of the cleaning module 100 is calculated by the motion detecting part 191, the control unit 195 receives the tilt angle and detects the tilt state of the cleaning module 100. (S 110)

In addition, when the output current of the mop motor 162 is measured by the load measuring part 193, the control unit 195 may detect the rotational load of the mop 161. (S120)

At this instance, the sequence of the detection of the tilt state (S110) and the detection of the rotational load of the mop 161 (S120) performed by the control unit 195 can be reversed and any one thereof may be detected first and the other may be detected later, and both may be detected at the same time.

As described above, by receiving both the tilt angle of the cleaning module from the motion detecting part 191 and the output current of the mop motor 162 from the load measuring part 193 and using them as the basis for determining whether the cleaning module 100 is spaced apart, which will be described later, the operational error probability of the safety mode control is reduced. That is, the operational accuracy of the safety mode control is improved.

The control unit 195 may determine whether the cleaning module 100 is spaced apart from the surface to be cleaned based on the tilt state and the rotational load which are detected. (S130)

In more detail, when the rotational load of the mop 161 is reduced to a preset threshold magnitude or less, and the tilt angle of the cleaning module 100 is equal to or more than the threshold angle, the control unit 195 may control the cleaning module 100 in the safety mode.

When the cleaning module 100 is controlled in the safety mode, the control unit 195 may stop drive of the heater 130 and the feedwater pump 141. (S140) As the drive of the feedwater pump 141 stops, an operation of discharging water from the water container 120 stops. In addition, as the drive of the heater 130 stops, the temperature raising operation of the water, which has flowed to the heater 130 after water discharge, stops.

By doing so, water at a high temperature is not supplied to the mop 161 any more when the cleaning module 100 is spaced apart upward from the surface to be cleaned.

At this instance, the control unit 195 may control the rotational speed of the mop motor 162 to be greater than 0 and smaller than the current speed. (S150) Even if the drive of the feedwater pump 141 and the heater 30 stop, when the speed of the mop motor 162 is maintained at the current speed, there may occur a problem that water at a high temperature which is not cooled splashes outside in a circumferential direction of the mop 161.

The current speed may mean a speed of the mop 161 while performing the wet cleaning in a state in which the mop 161 contacts the surface to be cleaned. From another viewpoint, the current speed may mean a speed of the mop 161 immediately after the mop 161 is spaced apart from the surface to be cleaned. From still another viewpoint, the current speed may mean a speed immediately before the mop 161 is determined to be spaced apart from the surface to be cleaned.

If the drive of the mop motor 162 stops in the safety mode, that is, if the rotational speed of the mop motor 162 becomes 0, a sudden rotation stop of the mop 161 may cause confusion for users. The user may be confused that the drive of the cleaner has stopped when the rotation of the mop stops, and may touch the mop 161 or the cleaning module 100 which are both at a still high temperature with hands, thereby being exposed to risk of burns.

In contrast to this, as in the embodiment of the present disclosure, when the rotational speed of the mop motor 162 is controlled to be greater than 0 but smaller than the current speed in the safety mode, since the rotation of the mop 161 is maintained, there is no concern for the confusion of the user that the cleaner is stopped. At the same time, since the rotational speed of the mop 161 is reduced, the problem of high temperature water scattering widely is also prevented. In other words, since the user is not exposed to the risk of burns, safety when using the cleaner is improved.

In addition, when changing the operation of the cleaning module 100 for a short period of time, such as when readjusting the position of the cleaning module 100 or changing the cleaning position, there is an effect of increasing the speed of the drive again, that is, quickly restarting the mop 161 is possible because the speed of the mop motor 162 is not stopped.

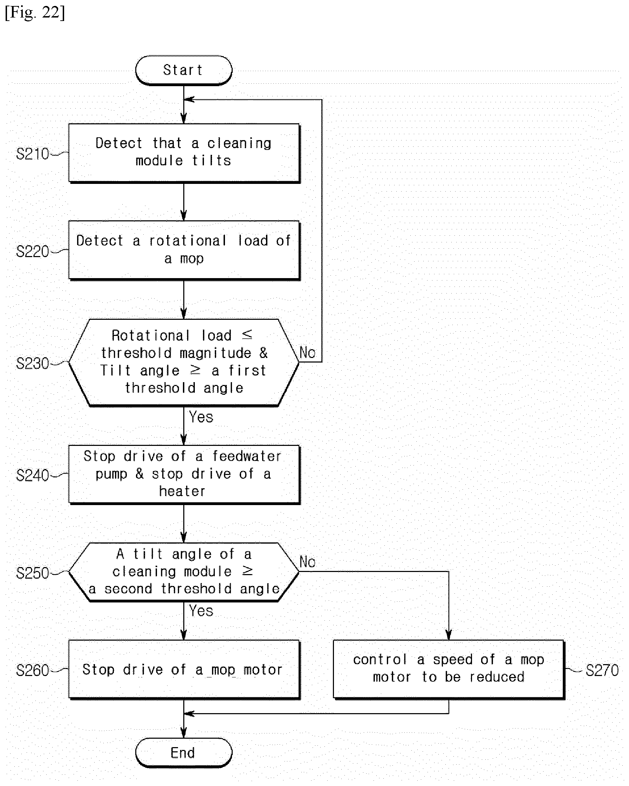

Hereinafter, referring to FIG. 22, a second embodiment of the safety mode control will be described.

When the tilt angle of the cleaning module 100 is calculated by the motion detecting part 191, the control unit 195 may receive the tilt angle and detect the tilt state of the cleaning module 100. (S210)

In addition, when the output current of the mop motor 162 is measured by the load measuring part 193, the control unit 195 may detect the rotational load of the mop 161. (S220)

At this instance, the sequence of the detection of the tilt state (S210) and the detection of the rotational load of the mop 161 (S220) performed by the control unit 195 can be reversed and any one thereof may be detected first and the other may be detected later, and both may be detected at the same time.

As described above, by receiving both the tilt angle of the cleaning module from the motion detecting part 191 and the output current of the mop motor 162 from the load measuring part 193 and using them as the basis for determining whether the cleaning module 100 is spaced apart, which will be described later, the operational error probability of the safety mode control is reduced. That is, the operational accuracy of the safety mode control is improved.

The control unit 195 may determine whether the cleaning module 100 is spaced apart from the surface to be cleaned based on the tilt state and the rotational load which are detected. (S230)

In more detail, when the rotational load of the mop 161 is reduced to the preset threshold magnitude or less, and the tilt angle of the cleaning module 100 is equal to or more than a first threshold angle and smaller than a second threshold angle, the control unit 195 may control the cleaning module 100 in a first safety mode.

When the cleaning module 100 is controlled in the first safety mode, the control unit 195 may stop drive of the heater 130 and the feedwater pump 141. (S240) As the drive of the feedwater pump 141 stops, an operation of discharging water from the water container 120 stops. In addition, as the drive of the heater 130 stops, the temperature raising operation of the water, which has flowed to the heater 130 after water discharge, stops.

At this instance, the control unit 195 may control the rotational speed of the mop motor 162 to be greater than 0, and smaller than the current speed. (S270)

The advantageous effect obtainable when the cleaning module 100 is controlled in the first safety mode is the same as that of the first embodiment described above, therefore, redundant description will be omitted here.

When the rotational load of the mop 161 is reduced to be equal to or smaller than the preset threshold magnitude, and the tilt angle of the cleaning module 100 is equal to or greater than the second threshold angle, the control unit 195 may control the cleaning module in a second safety mode. Here, the second threshold angle has a value greater than the first threshold angle.

When the cleaning module 100 is controlled in the second safety mode, the control unit 195 may stop drive of the heater 130 and the feedwater pump 141. (S240) As the drive of the feedwater pump 141 stops, an operation of discharging water from the water container 120 stops. In addition, as the drive of the heater 130 stops, the temperature raising operation of the water, which has flowed to the heater 130 after water discharge, stops.

At this instance, the control unit 195 may control the mop motor 162 such that the rotational speed of the mop 161 becomes 0, that is, the mop motor 162 also stops. (S260)

In the second embodiment, the difference between the first safety mode and the second safety mode lies in whether the mop motor 162 is controlled to stop.

The first safety mode is a case where the tilt angle of the cleaning module 100 is smaller than that of the second safety mode, and at this instance, it is highly likely that the user lifts the cleaning module to move it, therefore, the cleaning module 100 is controlled in the first safety mode.

The second safety mode is a case where the tilt angle of the cleaning module 100 is greater than that of the first safety mode, and at this instance, it is highly likely that the user intentionally turns over the cleaning module 100, therefore, the cleaning module 100 is controlled in the second safety mode.

The safety unit 195 controls the mop motor 162 to stop in the second safety mode because the cleaning operation is less likely to restart than the first safety mode. Therefore, scattering of high temperature water upward from the cleaning module 100 which is tilt at a great angle or turned over can be prevented. In addition, because the mop motor 162 stops immediately after the user turns over the cleaning module 100 intentionally, convenience for the user in checking the bottom surface of the cleaning module 100 (bottom surface of the mop 161) with eyes through the operating part 460 is provided, without turning off the power of the cleaner. At this instance, there is also an effect that the user is not exposed to the risk of burns.

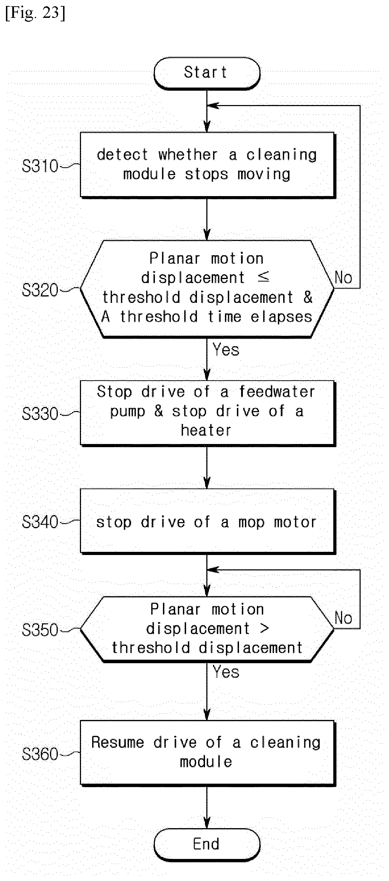

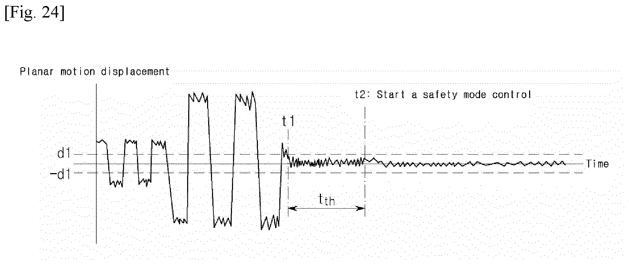

Hereinafter, referring to FIGS. 23 and 24, a third embodiment of the safety mode control will be described.

When the planar motion displacement of the cleaning module 100 is calculated by the motion detecting part 191, the control unit 195 may receive the planar motion displacement and detect whether the cleaning module 100 in a state of stopping moving. (S310)

At this instance, the state of stopping moving means a state in which the cleaning module 100 contacts the surface to be cleaned, that is, the mop 161 contacts the surface to be cleaned, and the cleaning module 100 has no change of displacement to an extent which is equal to or greater than the threshold displacement in any direction among forward and rearward directions, and left and right directions.

When a certain time elapses in a state in which the planar motion displacement of the cleaning module 100 detected by the motion detecting part 191 is equal to or smaller than the preset threshold displacement, the control unit 195 may perform the safety mode control.

In more detail, referring to FIG. 24, during the cleaning operation, the user cleans the surface to be cleaned while pushing the cleaning module 100 forward, or pulling it rearward. Therefore, during the cleaning operation, the planar motion displacement which is equal to or greater than the threshold displacement is intermittently shown.

When assuming a case where the user leaves the cleaner unattended on the surface to be cleaned at a t1 time point, the cleaning module 100 cannot move forward or rearward with respect to the surface to be cleaned any more, and vibrates with a small displacement according to the rotation of the mop 161 at the same spot. In this instance, the cleaning module 100 vibrates with a displacement smaller than the preset threshold displacement d1.

It is preferable to set the threshold displacement d1 to be greater than the displacement which occurs according to the rotation of the mop 161 in a state in which the cleaning module 100 is not manipulated. Such a threshold displacement d1 may be properly set by conducting a plurality of experiments.

When a preset threshold time Tₜₕ elapses and a t2 time point is reached in a state in which the threshold displacement d1 of the cleaning module 100 is equal to or smaller than the threshold displacement d1, the control unit 195 controls the cleaning module 100 in the safety mode.

The control unit 195 may stop drive of the feedwater pump 141 and the heater 130 when controlling the cleaning module 100 in the safety mode. (S330) As the drive of the feedwater pump 141 stops, an operation of discharging water from the water container 120 stops. In addition, as the drive of the heater 130 stops, the temperature raising operation of the water, which has flowed to the heater 130 after water discharge, stops.

By doing so, there is an advantageous effect of preventing the flooring of the surface to be cleaned from being damaged by the high temperature.

When the cleaning module 100 is controlled in the safety mode, the control unit 195 may stop drive of the mop motor 162. (S340)

By doing so, there is an advantageous effect of preventing the electricity of the cleaner from being wasted when the user suddenly leaves the cleaner unattended without turning off the power of the cleaner through the operating part 460.

At this instance, the electric power being supplied to the cleaning module 100 may be maintained. That is, the power of the cleaner is not turned off, but the electric power being supplied to the feedwater pump 141, the heater 130, and the mop motor 162 may only be blocked. If the user returns to the place and moves the cleaner to an extent which is equal to or more than the threshold displacement d1 (S350), the safety mode control is disabled, and the electric power may be supplied to the feedwater pump 141, the heater 130, and the mop motor 162 again. That is, the drive of the cleaning module 100 may be resumed. (S360)

By doing so, there is an advantageous effect that the cleaning operation can be resumed rapidly even though the user does not turn on the power of the cleaner through the operating part 460 after returning to the place.

For example, the source of the electric power being supplied to the cleaning module 100 may be the main battery 470, or the sub battery 300.

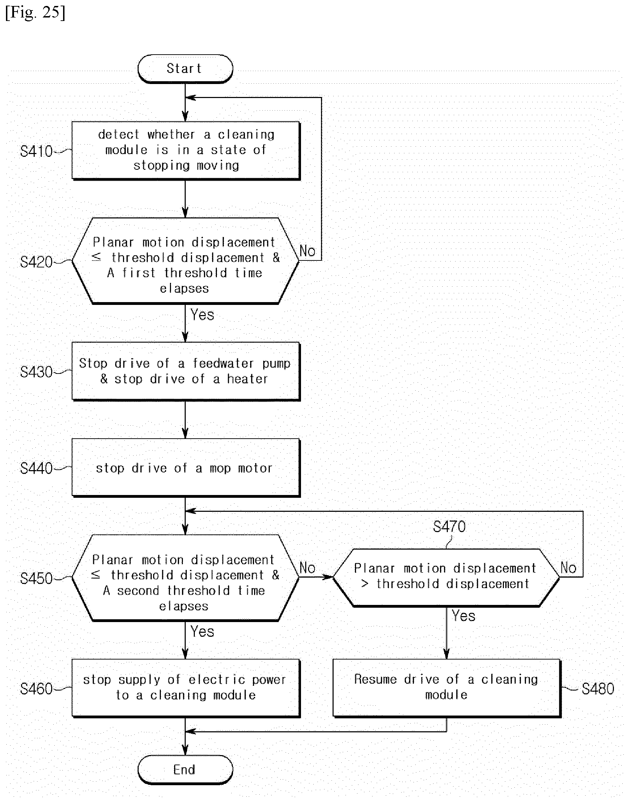

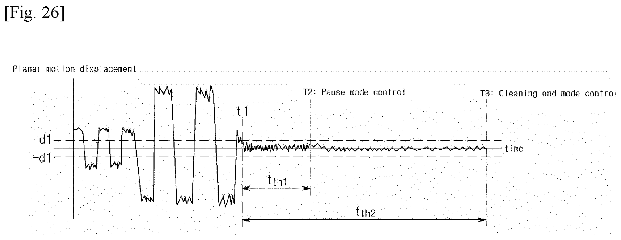

Hereinafter, referring to FIGS. 25 and 26, a fourth embodiment of the safety mode control will be described.

When the planar motion displacement of the cleaning module 100 is calculated by the motion detecting part 191, the control unit 195 may receive the planar motion displacement and detect whether the cleaning module 100 is in a state of stopping moving. (S410)

At this instance, the state of stopping moving means a state in which the cleaning module 100 contacts the surface to be cleaned, that is, the mop 161 contacts the surface to be cleaned, and the cleaning module 100 has no change of displacement to an extent which is equal to or greater than the threshold displacement in any direction among forward and rearward directions, and left and right directions.

When a certain time elapses in a state in which the planar motion displacement of the cleaning module 100 detected by the motion detecting part 191 is equal to or smaller than the preset threshold displacement, the control unit 195 may perform the safety mode control.

The safety mode control in the present embodiment includes a pause mode control and a cleaning end mode control which will be described below.

In more detail, referring to FIG. 26, during the cleaning operation, the user cleans the surface to be cleaned while pushing the cleaning module 100 forward, or pulling it rearward. Therefore, during the cleaning operation, the planar motion displacement which is equal to or greater than the threshold displacement is intermittently shown.

When assuming a case where the user leaves the cleaner unattended on the surface to be cleaned at a t1 time point, the cleaning module 100 cannot move forward or rearward with respect to the surface to be cleaned any more, and vibrates with a small displacement according to the rotation of the mop 161 at the same spot. In this instance, the cleaning module 100 vibrates with a displacement smaller than the preset threshold displacement d1.

It is preferable to set the threshold displacement d1 to be greater than the displacement which occurs according to the rotation of the mop 161 in a state in which the cleaning module 100 is not manipulated. Such a threshold displacement d1 may be properly set by conducting a plurality of experiments.

When a preset first threshold time Ttₕ₁ elapses and the t2 time point is reached in a state in which the threshold displacement d1 of the cleaning module 100 is equal to or smaller than the threshold displacement d1(S420), the control unit 195 controls the cleaning module 100 in the pause mode.

The control unit 195 may stop drive of the feedwater pump 141 and the heater 130 when controlling the cleaning module 100 in the pause mode. (S430) As the drive of the feedwater pump 141 stops, an operation of discharging water from the water container 120 stops. In addition, as the drive of the heater 130 stops, the temperature raising operation of the water, which has flowed to the heater 130 after water discharge, stops.

By doing so, there is an advantageous effect of preventing the flooring of the surface to be cleaned from being damaged by the high temperature.

When the cleaning module 100 is controlled in the pause mode, the control unit 195 may pause drive of the mop motor 162. (S440)

By doing so, there is an advantageous effect of preventing the electricity of the cleaner from being wasted when the user suddenly leaves the cleaner unattended without turning off the power of the cleaner through the operating part 460.

At this instance, the electric power being supplied to the cleaning module 100 may be maintained. That is, the power of the cleaner is not turned off, but the electric power being supplied to the feedwater pump 141, the heater 130, and the mop motor 162 may only be blocked. If the user returns to the place and moves the cleaner to an extent which is equal to or more than the threshold displacement d1, the pause mode control is disabled, and the electric power may be supplied to the feedwater pump 141, the heater 130, and the mop motor 162 again. That is, the drive of the cleaning module 100 may be resumed. (S470)

By doing so, there is an advantageous effect that the cleaning operation can be resumed rapidly even though the user does not turn on the power of the cleaner through the operating part 460 after returning to the place.

For example, the source of the electric power being supplied to the cleaning module 100 may be the main battery 470, or the sub battery 300.

When a preset second threshold time Tₜₕ₂ elapses and a t3 time point is reached in a state in which the threshold displacement d1 of the cleaning module 100 is equal to or smaller than the threshold displacement d1(S450), the control unit 195 controls the cleaning module 100 in the cleaning end mode.

At this instance, the second threshold time tₜₕ₂ is a time which is greater than the first threshold time tₜₕ₁.

When the cleaning module 100 is controlled in the cleaning end mode, the control unit 195 maintains the paused state of the feedwater pump 141, the heater 130, and the mop motor 162 as it is, and stops supply of the electric power to the cleaning module 100 as well. (S460)

That is, the power of the cleaner is turned off in the cleaning end mode. The user may turn on the power of the cleaner by manipulating the power button of the operating part 460 again to resume the cleaning operation.

By doing so, it is possible to prevent the main battery 470 or the sub battery 300 from being discharged after leaving the cleaner unattended for a long period of time. It is preferable to set the second threshold time to be sufficiently long because the user may have inconvenience of manipulating the cleaner again after returning to the place at an elapse of a short period time.

As such, in the fourth embodiment, the safety mode control is performed by dividing into the pause mode and the cleaning end mode. Therefore, there are effects that damage of the flooring can be prevented, and the electric power is not wasted without bothering the user to restart the drive of the cleaning module 100.

The above-described first to the fourth embodiments may be independently performed. Alternatively, two or more embodiments may be performed at the same time. For example, the first embodiment and the third embodiment may be performed at the same time. For example, the second embodiment and the fourth embodiment may be performed at the same time. For example, the first embodiment and the fourth embodiment may be performed at the same time. For example, the second embodiment and the third embodiment may be performed at the same time.

A case, in which the cleaning module 100 is spaced apart from the surface to be cleaned, may be defined as an occurrence of a first event.

In addition, a case, in which the cleaning module 100 is not moved for a certain period of time, may be defined as an occurrence of a second event.

If the first event occurs and the second event does not occur, the safety mode control may be performed according to the first embodiment or the second embodiment which have been described above.

If the second event occurs and the first event does not occur, the safety mode control may be performed according to the third embodiment or the fourth embodiment which have been described above.

A case, in which the cleaning module 100 is spaced apart from the surface to be cleaned and is not moved while in contact with the surface to be cleaned, cannot be introduced, and therefore, a case, in which the first event and the second event occur at the same time, is not disclosed in the present disclosure.

As described above, through one or more sensors included in the motion detecting part, changes in the posture of the cleaning module may be measured. Accordingly, when the control unit detects that the cleaning module is spaced apart from the surface to be cleaned, drive of at least one of the feedwater pump, the heater, and the mop motor stops. Therefore, there is an effect that the problem of injury to the user's body by the mop containing high temperature steam does not occur.

In addition, according to the present disclosure, through one or more sensors included in the motion detecting part, the planar motion displacement of the cleaning module can be measured. Accordingly, when the control unit detects whether the cleaning module is left in contact with the surface to be cleaned for a long period of time, the drive of the feedwater pump, the heater, and the mop motor stops. Therefore, there is an effect that the flooring of the surface to be cleaned is not damaged.

The block diagrams as described in the disclosure may be construed by one of ordinary skill in the art as conceptual representation of circuitry for implementing principles of the disclosure. Similarly, it is also understood by one of ordinary skill in the art that any flowcharts, flow diagrams, state transitions, pseudo codes, etc., may be substantially embodied in a computer-readable medium as various processes that may be carried out by a computer or processor, whether or not the computer or the processor is explicitly shown.

Accordingly, the aforementioned embodiments can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

The functions of various elements illustrated in the drawings may be related to appropriate software, and be provided via not only hardware capable of executing the software but also exclusive hardware. These functions may also be provided via a single exclusive processor, a single shared processor, or a plurality of individual processors, some of which may be shared.

Also, explicit use of the term 'processor' or 'controller' is not limited to exclusively using hardware capable of executing software, and may implicitly include a digital signal processor (DSP) hardware, and a read-only memory (ROM), a random access memory (RAM), or a non-volatile storage medium for storing software.

While the exemplary embodiments have been particularly shown and described with reference to the drawings, it will be understood by those of ordinary skill in the art that various changes in form and details may be made therein without departing from the spirit and scope of the inventive concept as defined by the appended claims. The exemplary embodiments should be considered in descriptive sense only and not for purposes of limitation. Therefore, the scope of the inventive concept is defined not by the described embodiments but by the appended claims.

## Claims

1. A cleaner configured to wet clean a surface to be cleaned using a rotating mop, comprising:
a main body in which an operating part configured to receive an instruction and a main battery configured to supply electric power are disposed; and
a cleaning module to which the main body is connected on an upper part thereof and to which the mop is connected on a lower part thereof,
wherein the cleaning module comprises:
a water container;
a heater configured to generate steam to be supplied to the mop from water stored in the water container;
a feedwater pump configured to press the water stored in the water container to be pressure-fed into the heater;
a mop motor connected to the mop and configured to be driven to rotate the mop;
a motion detecting part configured to detect a motion of the cleaning module;
a load measuring part configured to measure a rotational load of the mop; and
a control unit configured to control the cleaning module in a safety mode when the motion detecting part detects that the cleaning module is in a tilted state compared to a surface to be cleaned, or when the load measuring part detects a certain magnitude reduction with respect to the rotational load, and
wherein the safety mode control is a stopping operation of at least one among the heater, the feedwater pump, and the mop motor.

2. The cleaner of claim 1,
wherein the motion detecting part comprises a gyro sensor which detects a tilt angle at which the cleaning module is tilted compared to the surface to be cleaned.

3. The cleaner of claim 1,
wherein the motion detecting part comprises an acceleration sensor which detects a tilt angle at which the cleaning module is tilted compared to the surface to be cleaned.

4. The cleaner of claim 1,
wherein under the safety mode control, the control unit stops drive of the heater and the feedwater pump and controls a rotating speed of the mop motor to be greater than 0 and smaller than a current speed.

5. The cleaner of claim 1,
wherein the motion control unit detects a tilt angle at which the cleaning module is tilted compared to a surface to be cleaned, and
wherein under the safety mode control, the control unit performs a first safety mode control which stops drive of the heater and the feedwater pump and controls a rotating speed of the mop motor to be greater than 0 and smaller than a current speed when the detected angle is equal to or greater than a preset first threshold angle and smaller than a second threshold angle, and
performs a second safety mode control which stops drive of the heater, the feedwater pump, and the mop motor when the detected angle is equal to or greater than the second threshold angle.

6. A cleaner configured to wet clean a surface to be cleaned using a rotating mop, comprising:
a main body in which an operating part configured to receive an instruction and a main battery configured to supply electric power are disposed; and
a cleaning module to which the main body is connected on an upper part thereof and to which the mop is connected on a lower part thereof,
wherein the cleaning module comprises:
a water container;
a heater configured to generate steam to be supplied to the mop from water stored in the water container;
a feedwater pump configured to press the water stored in the water container to be pressure-fed into the heater;
a mop motor connected to the mop and configured to be driven to rotate the mop;
a motion detecting part configured to detect a motion of the cleaning module; and
a control unit configured to control the cleaning module in a safety mode when the motion detecting part detects that the cleaning module is in a non-moving-state on a surface to be cleaned, and
wherein the safety mode control is a stopping operation of the heater, the feedwater pump, and the mop motor.

7. The cleaner of claim 6,
wherein the motion detecting part comprises a displacement sensor which detects a planar motion displacement with which the cleaning module travels in a state of contacting a surface to be cleaned.

8. The cleaner of claim 6,
wherein when a certain time elapses in a state in which the planar motion displacement of the cleaning module detected by the motion detecting part is equal to or smaller than a preset threshold displacement, the control unit performs the safety mode control.

9. The cleaner of claim 6,
wherein when a preset first threshold time elapses in a state in which the planar motion displacement of the cleaning module detected by the motion detecting part is equal to or smaller than a preset threshold displacement, the control unit performs a pause mode control which pauses the heater, the feedwater pump, and the mop motor, and continues supply of electric power to the cleaning module, and
wherein when a preset second threshold time which is greater than the first threshold time elapses in a state in which the planar motion displacement of the cleaning module detected by the motion detecting part is equal to or smaller than a preset threshold displacement, the control unit performs a cleaning end mode control which maintains a paused state of the heater, the feedwater pump, and the mop motor and stops supply of electric power to the cleaning module.

10. The cleaner of claim 9,
wherein the electric power is supplied from a main battery or, a sub battery installed in a connection pipe which connects between the cleaning module and the main body.

11. A cleaner configured to wet clean a surface to be cleaned using a rotating mop, comprising:
a main body in which an operating part configured to receive an instruction and a main battery configured to supply electric power are disposed; and
a cleaning module to which the main body is connected on an upper part thereof and to which the mop is connected on a lower part thereof,
wherein the cleaning module comprises:
a water container;
a heater configured to generate steam to be supplied to the mop from water stored in the water container;
a feedwater pump configured to press the water stored in the water container to be pressure-fed into the heater; and
a mop motor connected to the mop and configured to be driven to rotate the mop, and
wherein when at least one among a first event, in which the cleaning module is spaced apart from a surface to be cleaned, and a second event, in which the cleaning module does not move for a certain period of time or more, occurs, at least one among the heater, the feedwater pump, and the mop motor is controlled to stop.

12. The cleaner of claim 11,
wherein when the first event occurs and the second event does not occur, the heater and the feedwater pump are controlled to stop, and a speed at which the mop motor rotates is controlled to be greater than 0, and smaller than a current speed.

13. The cleaner of claim 11,
wherein when the first event occurs and the second event does not occur,
the cleaner operates in a first safety mode which stops drive of the heater and the feedwater pump and controls a rotating speed of the mop motor to be greater than 0 and smaller than a current speed when a tilt angle of the cleaning module compared to a surface to be cleaned is equal to or greater than a preset first threshold angle and smaller than a second threshold angle, and
the cleaner operates in a second safety mode which stops drive of the heater, the feedwater pump, and the mop motor when a tilt angle of the cleaning module compared to a surface to be cleaned is equal to or greater than the second threshold angle.

14. The cleaner of claim 11,
wherein when only the second event occurs, at an elapse of a certain time in a state in which a planar motion displacement with which the cleaning module travels in a state of contacting a surface to be cleaned is equal to or smaller than a preset threshold displacement, the heater, the feedwater pump, and the mop motor are controlled to stop.

15. The cleaner of claim 11,
wherein when only the second event occurs,
at an elapse of a preset first threshold time in a state in which a planar motion displacement with which the cleaning module travels in a state of contacting a surface to be cleaned is equal to or smaller than a preset threshold displacement, the cleaner operates in a pause mode in which the heater, the feedwater pump, and the mop motor are paused and supply of electric power to the cleaning module continues, and
at an elapse of a preset second threshold time which is greater than the first threshold time in a state in which the planar motion displacement is equal to or smaller than a preset threshold displacement, the cleaner operates in a cleaning end mode in which a paused state of the heater, the feedwater pump, and the mop motor is maintained and supply of electric power to the cleaning module stops.

16. The cleaner of claim 15,
wherein the electric power is supplied from a main battery or, a sub battery installed in a connection pipe which connects between the cleaning module and the main body.

17. The cleaner of claim 11,
wherein the cleaning module further comprises a gyro sensor which detects occurrence of the first event.

18. The cleaner of claim 11,
wherein the cleaning module further comprises an acceleration sensor which detects occurrence of the first event.

19. The cleaner of claim 11,
wherein the cleaning module further comprises a displacement sensor which detects occurrence of the second event.
